(19) **Europäisches Patentamt / European Patent Office / Office européen des brevets**

(11) **EP 4 417 309 A1**

(12) # EUROPEAN PATENT APPLICATION
published in accordance with Art. 153(4) EPC

(43) Date of publication:
**21.08.2024 Bulletin 2024/34**

(21) Application number: **22880870.5**

(22) Date of filing: **04.10.2022**

(51) International Patent Classification (IPC):
**B01J 35/10** (2006.01)    **B01J 37/02** (2006.01)
**B01J 37/04** (2006.01)    **B01J 37/08** (2006.01)
**B01D 53/94** (2006.01)    **B01J 29/74** (2006.01)
**B01J 20/18** (2006.01)    **B01J 20/28** (2006.01)

(52) Cooperative Patent Classification (CPC):
**B01D 53/94; B01J 20/18; B01J 20/28; B01J 29/74;
B01J 35/60; B01J 37/02; B01J 37/04; B01J 37/08**

(86) International application number:
**PCT/JP2022/037150**

(87) International publication number:
**WO 2023/063174 (20.04.2023 Gazette 2023/16)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **14.10.2021 JP 2021169144**

(71) Applicant: **Mitsui Mining & Smelting Co., Ltd.
Shinagawa-ku
Tokyo 141-8584 (JP)**

(72) Inventors:
• **ENDO, Yoshinori
  Ageo-shi, Saitama 362-0025 (JP)**
• **YAMANAKA, Momoka
  Ageo-shi, Saitama 362-0025 (JP)**
• **GOTO, Hidekazu
  Ageo-shi, Saitama 362-0025 (JP)**
• **BABA, Takashi
  Ageo-shi, Saitama 362-0025 (JP)**

(74) Representative: **Novagraaf Technologies
Bâtiment O2
2, rue Sarah Bernhardt
CS90017
92665 Asnières-sur-Seine Cedex (FR)**

(54) # EXHAUST GAS CLEANING CATALYST AND PRODUCTION METHOD THEREFOR

(57)    An exhaust gas purification catalyst including: a substrate; and an adsorbent portion provided to the substrate and containing a Si-containing adsorbent material. The adsorbent portion includes a plurality of voids, and in a cross section orthogonal to an exhaust gas flow direction, the percentage of a total area of the voids that are present in the adsorbent portion and that each satisfy the expression below is greater than 5% to 30% or less with respect to an apparent area of the adsorbent portion present on the substrate. Expression: $L/\{2(\pi S)1/2\} \leq 1.1$. (L is a perimeter of the void in the cross section, and S is an area of the void in the cross section.)

Fig. 7

EP 4 417 309 A1

**Description**

Technical Field

The present invention relates to an exhaust gas purification catalyst and a method for manufacturing the same.

Background Art

An exhaust gas purification catalyst used in an engine, such as a gasoline engine, exerts its exhaust gas purification performance by a rise in temperature caused by contact with high-temperature exhaust gas emitted from the engine. However, immediately after engine start-up, the rise in temperature may be insufficient, and therefore, the exhaust gas purification catalyst may not be able to sufficiently exert its exhaust gas purification performance and may thus emit hydrocarbons (HC) etc. contained in the exhaust gas without purification. Hence, considerations are being made regarding the use of a HC-trapping material, which adsorbs HC contained in exhaust gas immediately after engine start-up and then releases the HC after some time has passed from engine start-up and the exhaust gas has raised the temperature of the exhaust gas purification catalyst. Conventionally known HC-trapping materials include adsorbent materials containing silicon (Si), such as zeolites. For example, Patent Literatures 1 to 3 disclose exhaust gas purification catalysts including a zeolite-containing catalyst layer.

Further, in order to improve the contact efficiency with exhaust gas, there are known techniques that provide an exhaust gas purification catalyst with a catalyst layer having voids formed by a void former. For example, Patent Literatures 4 and 5 disclose exhaust gas purification catalysts having specific voids.

Citation List

Patent Literature

Patent Literature 1: EP 3623048 A1
Patent Literature 2: US 2019099749 A1
Patent Literature 3: WO 2017/178801 A1
Patent Literature 4: Japanese Patent No. 6751831
Patent Literature 5: WO 2021/029098 A1

Summary of Invention

A Si-containing adsorbent material, such as a zeolite, is typically formed on a substrate as a layer-form adsorbent portion (adsorbent layer). Such an adsorbent layer, however, has difficulty in achieving HC adsorption performance, because flowing exhaust gas passes near the surface of the adsorbent layer at high speed, which results in poor contact efficiency with zeolite within the adsorbent layer. To address this issue, considerations are being made to form voids in the adsorbent layer in order to improve contact efficiency between exhaust gas and zeolite. A Si-containing adsorbent material, however, has a high specific surface area; therefore, generally, in cases where this material is formed on a substrate or another catalyst layer, the adhesion to the substrate or catalyst layer is poor, and further formation of voids tends to give rise to delamination of the adsorbent layer from the substrate or catalyst layer.

Patent Literatures 1 to 3 do not give consideration to compatibly achieving both HC adsorption performance and delamination resistance. Patent Literatures 4 and 5 only give consideration to pressure-loss prevention and PM collection rate in particulate filters, such as GPCs, and do not give consideration to HC adsorption performance in an adsorbent portion including a Si-containing adsorbent material.

The present invention aims to overcome drawbacks of the aforementioned conventional art, and to provide an exhaust gas purification catalyst capable of compatibly achieving both high delamination resistance and an improvement in HC adsorption performance in an adsorbent portion including a Si-containing adsorbent material, which was conventionally difficult to achieve.

The present invention provides aspects {1} to {17} below.

{1} Provided is an exhaust gas purification catalyst including:

a substrate; and
an adsorbent portion provided to the substrate and containing a Si-containing

adsorbent material, wherein:

the adsorbent portion includes a plurality of voids; and in a cross section orthogonal to an exhaust gas flow direction, the percentage of a total area of the voids that are present in the adsorbent portion and that each satisfy the expression below is greater than 5% to 30% or less with respect to an apparent area of the adsorbent portion present on the substrate.

$$\text{Expression: } L/\{2(\pi S)^{1/2}\} \leq 1.1.$$

(L is a perimeter of the void in the cross section, and S is an area of the void in the cross section.)

{2} The exhaust gas purification catalyst as set forth in clause {1}, wherein the Si-containing adsorbent material is a zeolite.

{3} The exhaust gas purification catalyst as set forth in clause {2}, wherein the zeolite is a zeolite having at least one type of pore structure selected from 10-membered rings and 12-membered rings.

{4} The exhaust gas purification catalyst as set forth in clause {2} or {3}, wherein the zeolite is at least one type of zeolite selected from BEA-type, MSE-type, and MFI-type.

{5} The exhaust gas purification catalyst as set forth in any one of clauses {2} to {4}, wherein a content by percentage of the zeolite in the adsorbent portion is from 10 to 90 mass%.

{6} The exhaust gas purification catalyst as set forth in any one of clauses {1} to {5}, wherein the adsorbent portion includes at least one type of noble metal selected from Pt, Pd, and Rh.

{7} The exhaust gas purification catalyst as set forth in any one of clauses {1} to {6}, wherein a value of the aforementioned percentage with respect to a thickness of the adsorbent portion is from 0.20 to 1.00 %/$\mu$m.

{8} The exhaust gas purification catalyst as set forth in any one of clauses {1} to {7}, wherein an average value of circle equivalent diameters of voids that are present in the adsorbent portion and that satisfy the aforementioned expression is from 1 to 60 $\mu$m.

{9} The exhaust gas purification catalyst as set forth in any one of clauses {1} to {8}, wherein an average value of the number of voids that are present in the adsorbent portion and that satisfy the aforementioned expression is from 200 to 800 per 1 mm$^2$ in cross-sectional area of the adsorbent portion.

{10} The exhaust gas purification catalyst as set forth in any one of clauses {1} to {9}, wherein a standard deviation of the circle equivalent diameters of voids that are present in the adsorbent portion and that satisfy the aforementioned expression is less than 25% of the average value of the circle equivalent diameters.

{11} The exhaust gas purification catalyst as set forth in any one of clauses {1} to { 10}, wherein the substrate is a flow-through substrate.

{12} The exhaust gas purification catalyst as set forth in any one of clauses {1} to {11}, including, as the adsorbent portion, an adsorbent layer containing a Si-containing adsorbent material, and further including a purification layer containing a catalytically-active component.

{13} The exhaust gas purification catalyst as set forth in any one of clauses {1} to {12}, wherein the adsorbent portion occupies from 20 to 50 mass% of a total coating amount.

{14} The exhaust gas purification catalyst as set forth in any one of clauses {1} to {13}, including, as the adsorbent portion, an adsorbent layer containing a Si-containing adsorbent material, wherein a thickness of the adsorbent layer is from 20% to 80% of a thickness of an entire coating layer on the substrate.

{15} An exhaust gas purification system including: at least two exhaust gas purification catalysts in an exhaust gas flow path, wherein

the exhaust gas purification system includes the exhaust gas purification catalyst as set forth in any one of clauses {1} to {14} as a second or subsequent catalyst from an upstream side of the exhaust gas flow direction.

{16} A method for manufacturing an exhaust gas purification catalyst,

the method including:
a step of applying a slurry to a substrate, the slurry containing

a Si-containing adsorbent material,
a void former constituted by a crosslinked resin, wherein the percentage of particles having a roundness of L'/$\{2(\pi S')^{1/2}\} \leq 1.05$ is 90% or higher in terms of the number of particles, and
water; and

a step of firing the slurry after being applied to the substrate, to form an adsorbent layer including the adsorbent material and voids formed by firing and eliminating the void former, wherein:

after stirring the slurry at a rotation speed of from 3000 to 8000 rpm, the slurry is applied to the substrate in a state where the viscosity at 25°C is from 2000 to 100000 cP.

(L' is an outer perimeter of the void former in an image obtained by observing the same with a scanning electron microscope, and S' is an area thereof in an image obtained by observing the same with a scanning electron microscope.)

{17} The method for manufacturing an exhaust gas purification catalyst as set forth in clause {16}, wherein an amount of the void former in the slurry is from 10 to 60 parts by mass with respect to 100 parts by mass of solid content in the slurry excluding the void former.

Brief Description of Drawings

[Fig. 1] Fig. 1 is a schematic perspective view of an exhaust gas purification catalyst which is an embodiment of the present invention.

[Fig. 2] Fig. 2 is a partially enlarged view of a cross section along the axial direction of a substrate.

[Fig. 3] Fig. 3 is a cross-sectional view along the axial direction of the substrate in the portion surrounded by the rectangle in Fig. 2.

[Fig. 4] Fig. 4 is a diagram illustrating an example of a method for extracting a sample for observing cross sections of an adsorbent layer.

[Fig. 5] Fig. 5 is a diagram illustrating an example of provisional boundary lines drawn on an image of an adsorbent layer 12 on a partition wall (substrate) as observed with a scanning electron microscope.

[Fig. 6] Figs. 6(a) and 6(b) are diagrams illustrating examples of observation images of cross sections of the adsorbent layer.

[Fig. 7] Fig. 7 is a diagram illustrating an example of an image of an adsorbent layer 12 on a partition wall (substrate) as observed with a scanning electron microscope, with division lines drawn thereon.

[Fig. 8] Figs. 8(a) and 8(b) are schematic diagrams for explaining how to draw division lines for finding the rate of approximately-perfect circular voids.

[Fig. 9] Figs. 9(a) to 9(c) are schematic diagrams for explaining how to draw division lines for finding the rate of approximately-perfect circular voids.

[Fig. 10] Figs. 10(a) and 10(b) are schematic diagrams for explaining how to draw division lines for finding the rate of approximately-perfect circular voids.

[Fig. 11] Figs. 11(a) and 11(b) are schematic diagrams for explaining a method for measuring the rate of approximately-perfect circular voids.

Description of Embodiments

The present invention will be described below according to preferred embodiments thereof. The present invention is, however, not limited to the following embodiments.

An exhaust gas purification catalyst 10 of the present embodiment will be described below.

The exhaust gas purification catalyst 10 of the present embodiment includes a substrate 11, and an adsorbent portion 12 (also referred to hereinafter as "adsorbent layer 12") provided to the substrate 11 and containing a Si-containing adsorbent material. Examples of objects that can be adsorbed by the Si-containing adsorbent material and the adsorbent portion (adsorbent layer) containing the same include organic substances in exhaust gas, such as HC (hydrocarbons), aldehydes, alcohols, carboxylic acids, ketones, ethers, esters, etc.

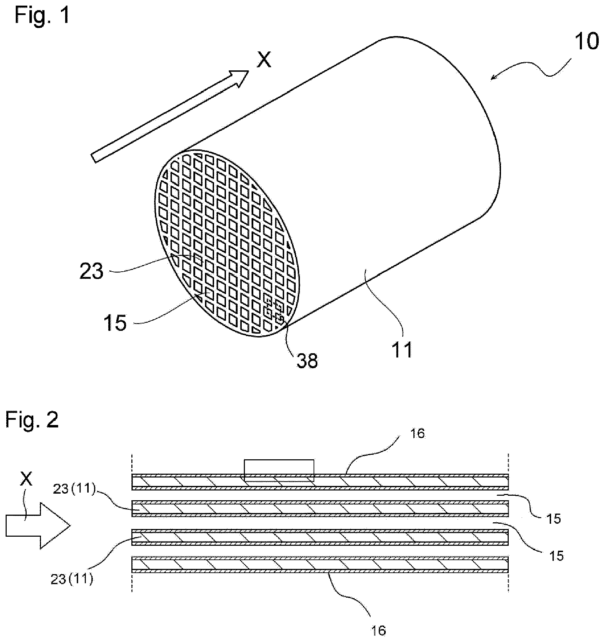

The exhaust gas purification catalyst 10 includes the substrate 11 as a support for forming the adsorbent layer 12. The substrate 11 may typically be shaped, for example, in a honeycomb shape, pellet shape, foam shape, etc.; preferable among the above is a honeycomb shape. An example of a honeycomb-shaped substrate may include a substrate having a multitude of cells 15 which are long exhaust gas flow passageways parallel to the axial direction, with examples including a wall-flow-type substrate and a flow-through-type substrate. In the present invention, it is preferable to use a flow-through-type substrate from the viewpoint of forming a uniform adsorbent layer 12. Figs. 1 and 2 illustrate examples wherein the substrate 11 of the exhaust gas purification catalyst 10 is a flow-through-type honeycomb substrate. As for the flow-through-type honeycomb substrate, from the viewpoint of HC adsorption performance and purification of adsorbed HC, it is preferable to use, for example, a substrate including about 200 to 900 cells per square inch, the substrate having a volume of from 0.01 to 2.0 L and an entire length of from 15 to 200 mm in the axial direction, wherein the thickness of a partition wall 23, which partitions the cells, is from 50 to 150 $\mu$m.

Examples of materials for the substrate 11 may include ceramics such as alumina ($Al_2O_3$), mullite ($3Al_2O_3$-$2SiO_2$), cordierite ($2MgO$-$2Al_2O_3$-$5SiO_2$), aluminum titanate ($Al_2TiO_5$), silicon carbide (SiC), etc., and metal materials such as stainless steel, etc. Typically, the substrate 11 has a circular cylindrical shape as illustrated in Fig. 1, and is arranged in the exhaust path of an internal combustion engine such that the axial direction of the cylindrical shape substantially matches the exhaust gas flow direction X. The outer shape of the entire substrate 11, however, may be elliptic cylindrical or polygonal columnar, instead of circular cylindrical. The substrate 11 is provided such that the axial direction thereof is parallel to the exhaust gas flow direction X.

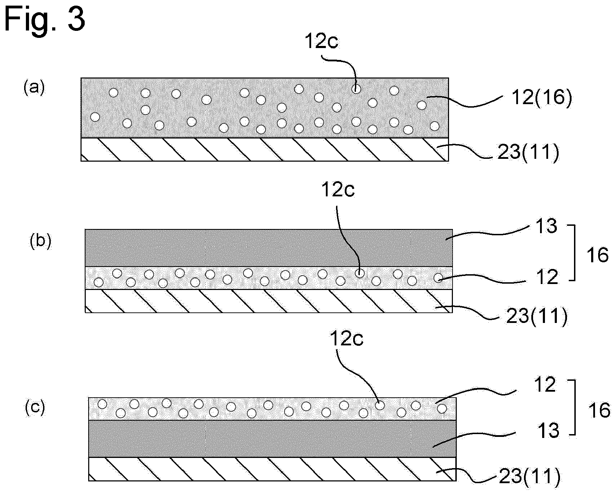

The layer-form adsorbent portion 12 including a Si-containing adsorbent material is provided on partition walls 23 of the substrate 11. In Fig. 2, a coating layer 16 provided on the substrate 11 is either: constituted by a layer-form adsorbent portion 12 containing a Si-containing adsorbent material; or partially includes, in the thickness direction, a layer-form adsorbent portion 12 containing a Si-containing adsorbent material. Hereinbelow, the layer-form adsorbent portion 12 containing a Si-containing adsorbent material may be referred to as an "adsorbent layer 12". Figs. 3(a) to 3(c) illustrate examples of forms in which the adsorbent layer 12 is provided on a partition wall 23 of the substrate 11. In the examples illustrated in Figs. 3(a) and 3(b), the adsorbent layer 12 is provided on the partition wall 23 such that it is in direct contact with the partition wall 23. In Fig. 3(b), another layer 13 is formed on a side of the adsorbent layer 12 opposite from the partition wall 23. Alternatively, as illustrated in Fig. 3(c), the adsorbent layer 12 may be provided on the partition wall 23 via another layer 13. The adsorbent layer 12 is formed in at least a portion of the substrate 11 in the exhaust gas flow direction X. As described above, in the present embodiment, an adsorbent portion including a Si-containing adsorbent material is provided on the partition wall 23 of the substrate 11, which is a concrete example in which an adsorbent portion including a Si-containing adsorbent material is provided to the substrate 11. Note that "another layer 13" refers to a layer that does not include a Si-containing adsorbent material. As illustrated in Figs. 3(a) to 3(c), the adsorbent layer 12 includes a plurality of voids 12c.

In the present invention, it has been found that, when the circular void rate in the adsorbent layer 12 in a cross section orthogonal to the exhaust gas flow direction X is greater than or equal to a specific value, the adsorbent layer 12 has excellent HC adsorption performance. The more voids there are in the adsorbent layer 12, the higher the contact probability becomes between the Si-containing adsorbent material within the adsorbent layer 12 and HC in the exhaust gas, which is advantageous in terms of HC adsorption performance. On the other hand, it is thought that, the more voids there are in the adsorbent layer 12, the more voids there will be in the vicinity of the interface between the adsorbent layer 12 and the other layer 13 or the partition wall 23. The reason to this is thought to be as follows. The voids in the adsorbent layer 12 are typically formed by adding a void former to an adsorbent layer-forming slurry and then firing the slurry to eliminate the void former. There are differences in size and/or specific gravity of particles in the void former. This tends to cause the void former, which is for obtaining the voids, to accumulate in the vicinity of the interface with the partition wall 23 of the substrate 11 or the other layer 13 within the slurry-coated portion during the course of slurry application and firing.

In the aforementioned cross section of the catalyst 10, circular voids have fewer points of contact with the partition wall (substrate) and the other layer compared to voids having other shapes. Further, spherical particles in the void former, which give circular voids in the cross section of the catalyst 10, have a small surface area per unit volume, and are thus less likely to aggregate compared to acicular or rectangular void former particles. This thus inhibits the formation of huge voids in the adsorbent layer 12.

From the aforementioned viewpoint, Inventors further diligently studied the relationship between the area ratio of circular voids in the adsorbent layer and HC adsorption performance as well as delamination resistance. As a result, Inventors have found that, when the circular void rate has a specific value, it is possible to obtain an adsorbent layer 12 having excellent HC adsorption performance while having high delamination resistance.

More specifically, in the exhaust gas purification catalyst 10, in a cross section orthogonal to the exhaust gas flow direction (hereinbelow also called "X direction" or "exhaust gas flow direction X"), the percentage (herein also called "circular void rate") of the total area of the voids, each satisfying the following expression $L/\{2(\pi S)^{1/2}\} \leq 1.1$ (wherein L is the perimeter of the void in the cross section, and S is the area of the void in the cross section), is preferably greater than 5% to 30% or less with respect to the apparent area of the adsorbent layer 12 present on the substrate 11.

1. The "apparent area of the adsorbent layer 12 present on the substrate 11 in the aforementioned cross section" refers to the entire area of the adsorbent layer 12, including the voids, present on the substrate 11 in the aforementioned cross section. The closer the value of the expression $L/\{2(\pi S)^{1/2}\}$ is to 1, the closer the shape is to a perfect circle. The minimum value of the expression is 1. Thus, the shape of a void whose value derived by the aforementioned expression is 1.1 or less is close to a perfect circle. Hereinbelow, a void satisfying the aforementioned expression is called an "approximately-perfect circular void". Considering that the circular void rate is measured based on image processing, it is preferable that the approximately-perfect circular voids have a circle equivalent diameter of 1 $\mu$m or greater. Therefore, preferably, the circular void rate is, more specifically, the percentage of the total area of voids each satisfying the aforementioned expression and having a circle equivalent diameter of from 1 to 60 $\mu$m. Herein, "circle equivalent diameter" refers to the diameter of a circle having the same area as the void.

Setting the circular void rate higher than 5% can improve the HC adsorption performance of the adsorbent layer 12. Setting the circular void rate to 30% or less can suppress delamination (peeling) of the adsorbent layer 12 from the partition wall 23 or the other layer 13. From this viewpoint, the circular void rate in the adsorbent layer 12 on the partition wall 23 of the substrate 11 is preferably from 5% to 30%, more preferably from 10% to 25%, even more preferably from 15% to 25%.

The circular void rate is preferably measured based on observation with a scanning electron microscope. The position, in the X direction, of the cross section of the exhaust gas purification catalyst 10 to be observed with a scanning electron microscope is not particularly limited, and a cross section at any discretionary position can be observed. An example of a method for measuring the circular void rate is described below.

(1) Sampling:

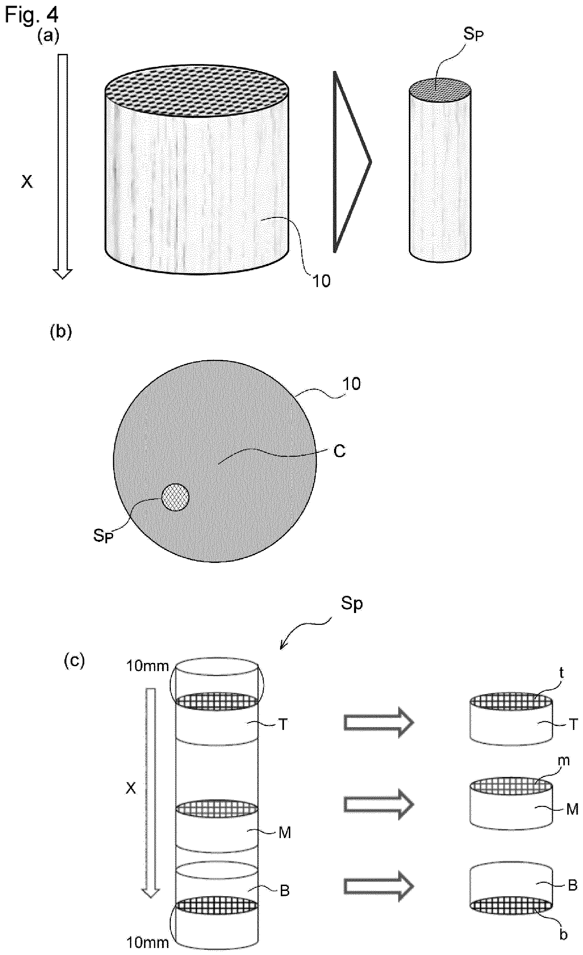

As illustrated in Fig. 4(a), a 25.4-mm-dia. circular-cylindrical sample Sp having a central axis parallel to the exhaust gas flow direction is cut out from the exhaust gas purification catalyst 10. The length of the circular-cylindrical sample Sp spans the entirety, in the exhaust gas flow direction X, of the exhaust gas purification catalyst 10. In a plane (see Fig. 4(b)) orthogonal to the exhaust gas flow direction, the position, in the exhaust gas purification catalyst 10, from which the circular-cylindrical sample Sp is cut out is not particularly limited. From the viewpoint of enabling a plurality of circular-cylindrical samples Sp to be cut out from a single catalyst, it is preferable that, in the aforementioned plane, the central axis of the cut-out portion is located at a position radially outward from the substrate 11's center C and separated therefrom by a length that is 10% to 70% of the radial length, as illustrated in Fig. 4(b). Note that the "substrate 11's center" in the aforementioned plane is a point that divides, into two equal parts, the longest line segment traversing the outer contour of the substrate 11 in the aforementioned plane. The "radial length" is half the aforementioned longest line segment.

As described above, the position of the cross section of the exhaust gas purification catalyst 10 in the exhaust gas flow direction X is not particularly limited. For example, the cross section of the adsorbent layer 12 can be easily observed if the cross-sectional position is at a position at least 5 mm separated from the upstream end or downstream end, in the X direction, of the circular-cylindrical sample Sp. Further, for example, the observation surface may be in a central portion, in the X direction, of the sample Sp. The observation surface is exposed by cutting the sample at a cross section orthogonal to the X direction. The observation surface is embedded with a resin and polished. From the viewpoint of handleability of the sample, the thickness (i.e., X-direction length) of the observation sample is preferably 10 mm. Fig. 4(c) illustrates an example for obtaining: two samples (T and B in Fig. 4(c)) for respectively observing positions t and b located 10 mm away from the respective upstream and downstream ends in the exhaust gas flow direction X; and a sample (M in Fig. 4(c)) for observing the center position m in the exhaust gas flow direction X.

(2) Specifying Partition Wall's Outer Edge in Contact with Adsorbent Layer:

On the observation surface, the distribution of the adsorbent layer 12 and the partition wall 23 or the other layer 13 located above or below the adsorbent layer is observed and determined by electron probe micro-analyzer (EPMA) mapping. The observation magnification is from 40x to 1000x (acceleration voltage: 15 to 25 kV).

The components to be used for determining the distribution of the adsorbent layer 12, the partition wall 23, and the other layer 13 in EPMA can be specified by subjecting these layers and the substrate 11 to X-ray fluorescence analysis etc. For example, in cases where the partition wall 23 (substrate 11) includes cordierite, the distribution of Mg may be observed as the substrate component. The adsorbent layer 12 contains a Si-containing adsorbent material, so the layer may be specified by observing the Si distribution. Alternatively, in cases where the adsorbent layer 12 contains a specific element other than Si, the adsorbent layer 12 may be specified by observing the distribution of the specific element. As for the other layer 13, any component not contained in the substrate 11 or the adsorbent layer 12 may be employed. The same sample is subjected to image capturing at the same position with a scanning electron microscope (SEM) under the same magnification as EPMA mapping, and the image is matched with the aforementioned EPMA mapping image, to determine the distribution of the adsorbent layer 12, the substrate 11, and (if necessary) the other layer 13. In cases where the adsorbent layer 12 is in direct contact with the substrate 11, a "provisional boundary line" of the adsorbent layer 12 on the substrate 11 is specified from the outer edge of the range in which the components of the substrate 11 are distributed. In cases where the adsorbent layer 12 is provided on the substrate 11 via another layer 13, a "provisional boundary line" of the adsorbent layer 12 on the other layer 13 is specified from the outer edge of the range in which the other layer 13 is distributed. The acceleration voltage of SEM observation is preferably from 10 to 15 kV.

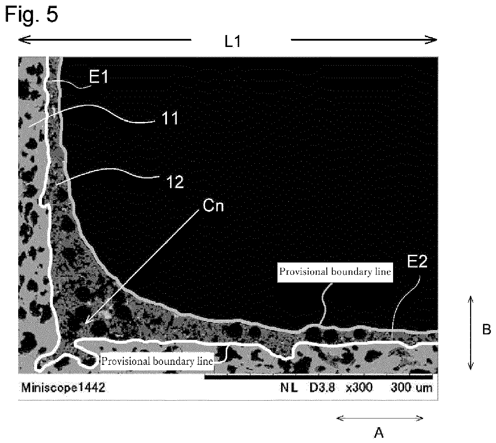

As described above, the cells of a honeycomb substrate typically have a polygonal shape in a cross section orthogonal to the X direction. As for the SEM observation image and EPMA observation image of a cell, an image including an intersection portion Cn where two sides intersect, such as a corner of a polygon, is adopted (see Fig. 5). Fig. 5 is an example of a SEM observation image of a cross section, orthogonal to the X direction, captured for an exhaust gas purification catalyst 10 wherein the adsorbent layer 12 is formed directly on a partition wall of a honeycomb substrate having cells with a square cross-sectional shape. Fig. 5 is an image observing a corner of a cell having a square cross-sectional shape in the exhaust gas purification catalyst 10. At an intersection portion Cn, such as this corner, where two sides of the substrate 11 intersect, the amount of adhesion, per unit area, of adsorbent material components on the substrate 11 is large, and the efficiency of contact with exhaust gas tends to be poor. It is therefore thought that the possession of a specific circular void rate can achieve a significant effect. Further, since the amount of adhesion of adsorbent material components is large at an intersection portion Cn, there are many voids present within the layer, thereby facilitating the observation of voids. The corner may be rounded.

In cases of employing an observation image of the aforementioned intersection portion Cn, it is preferable to employ an observation image of a portion wherein the length L1 (see Fig. 5) in the length direction of the observation image is 15% or greater with respect to the perimeter of the cell 15 of the substrate 11 in the aforementioned cross section (i.e., the inner perimeter, in the cross section orthogonal to the X direction, of the cell 15 before being coated by the slurry). Further, in cases where the cell 15 has a polygonal shape in the cross section orthogonal to the X direction, it is preferable that the length in the length direction L1 of the observation image is 80% or less of the length of one side of the polygon. In cases where the respective lengths of the sides of the polygon are not the same, the "length of one side" as referred to herein is the average value of the lengths of the sides.

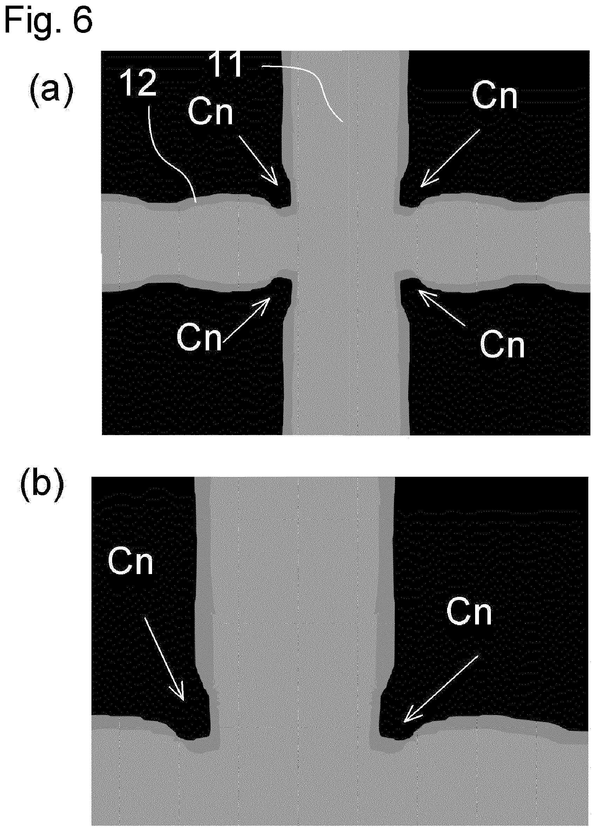

It should be noted that, preferably, there is one intersection portion Cn in a single observation image. More specifically, the meaning of "there is one intersection portion in a single observation image" is as follows. As in the portion surrounded by box 38 in Fig. 1, one intersection portion (corner) of a cell partitioned by partition walls is adjacent to another intersection portion (corner). Therefore, there is a possibility that, for example, depending on the observation image, a plurality of intersection portions Cn may be observed in a single observation image. For example, in Fig. 6(a), four intersection portions Cn are observed, and in Fig. 6(b), two intersection portions Cn are observed. However, in the present Description, it is preferable that a single observation image includes one intersection portion Cn (for example, see Fig. 5). Note, however, that it is permissible if an adjacent intersection portion Cn is inevitably included in the observation image. Further, for the observation image, it is preferable to employ an image in which the length of the adsorbent portion present within the range of the observation image is greater than or equal to a predetermined length. Stated differently, it is preferable to employ an observation image wherein the adsorbent layer 12, which is present on the single intersection portion Cn and extends along the two sides E1 and E2 connected thereto, is continuously present over a length of 80% or greater in the length direction A with respect to the length of the observation image in the same direction (see Fig. 5). Further, it is preferable to employ an observation image wherein the adsorbent layer 12, which is present on the single intersection portion Cn and extends along the two sides E1 and E2 connected thereto, is continuously present over a length of 80% or greater in the width direction B with respect to the length of the observation image in the same direction (see Fig. 5).

(3) Specifying Division Width:

As described above, the outer edge of the adsorbent layer 12 on the substrate 11 side is defined by the outer edge of the distribution range of the substrate component, or components in the other layer 13 if the other layer 13 is interposed, based on the SEM observation image and EPMA mapping image.

Similarly, as for the outer edge of the adsorbent layer 12 on the opposite side from the substrate 11, in cases where the adsorbent layer 12 has another layer 13 layered on the opposite side from the substrate 11, the outer edge of the adsorbent layer 12 on the opposite side from the substrate 11 is defined as the outer edge of the distribution range of the adsorbent layer 12. In cases where there is no other layer 13 layered on the adsorbent layer 12 on the opposite side from the substrate 11, the outer edge is defined by the difference in color between the adsorbent layer 12 and the exterior of the catalyst in the SEM observation image. As illustrated in Fig. 5, these outer edges of the adsorbent layer 12 are defined as "provisional boundary lines". An example of color difference is illustrated in Fig. 5, wherein the adsorbent layer 12 is gray, and the exterior of the catalyst 10 is black. The "provisional boundary line" can be defined by image processing software for drawing boundary lines as described below, and the setting of the selection threshold can be set to be within the same range as described below. The "provisional boundary lines" are for provisionally defining approximately-perfect circular voids to define the later-described division width, as well as for defining the later-described substrate-side boundary line and outer-side boundary line, but are not to be used for measuring the area of the adsorbent layer.

In the adsorbent layer on the substrate 11 or other layer 13 as defined by the provisional boundary lines, the void area (S) and void perimeter (L) for each void are measured, and determination is made regarding whether or not each void's circle equivalent diameter is from 1 to 60 $\mu$m and each void satisfies the expression $L/\{2(\pi S)^{1/2}\} \leq 1.1$. Image

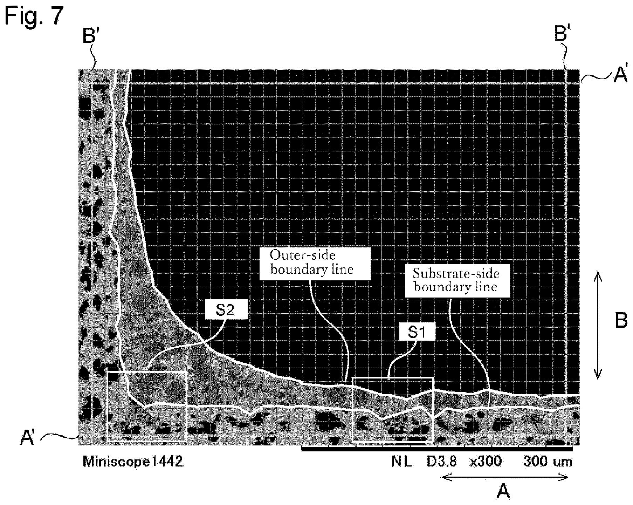

processing for specifying the shape of each void can be performed with image processing software for drawing boundary lines. An example of such image processing software for drawing boundary lines includes PictBear (from Fenrir Inc.). The selection threshold is preferably from 20 to 40 with reference to, for example, the color of a clear void section. The "color of a clear void section" is the color of a section other than the adsorbent layer's constituent components and the substrate 11, and is typically black, as illustrated in Fig. 5. Preferably, the outer periphery of each void is drawn using at least 20 points. After drawing the boundary line, the perimeter L and area S of each void are calculated, and image analysis software can be used for the calculation, with concrete examples including ImageJ (public domain), Photoshop (from Adobe Systems Incorporated), and AreaQ (from S-Tech Corporation). In a total of 20 fields-of-view, the area is measured for each void whose entirety is included within the adsorbent layer 12 on the partition wall 23, or on the other layer 13, as defined by the aforementioned "provisional boundary lines", whose circle equivalent diameter is from 1 to 60 $\mu$m, and that satisfies the expression $L/\{2(\pi S)^{1/2}\} <\_ 1.1$. For all such voids, the respective circle equivalent diameters are measured. Then, as illustrated in Fig. 7, for example, a plurality of straight lines that are respectively parallel to the vertical and horizontal directions of the observation image are drawn at equally spaced intervals on the SEM image of the catalyst's cross section, at intervals of a width that is less than or equal to the median diameter of the respectively-obtained circle equivalent diameters. Hereinbelow, the width between division lines is also referred to as "division width". A sufficient measurement accuracy can be secured if the division width is a width less than or equal to the median diameter of the respectively-obtained circle equivalent diameters, and the division width is set, for example, to 75% of the median diameter of the respectively-obtained circle equivalent diameters. In Fig. 7, the length direction of the observation image is the horizontal direction A, and the width direction is the vertical direction B. In cases where the observation image has a shape, such as a square, that does not have a length direction, the terms "length direction" and "width direction" in the description below are to be read as "horizontal direction" and "vertical direction".

It should be noted that each of the "20 fields-of-view" refers to a field-of-view including at least one void whose entirety is included within the adsorbent layer 12 on the partition wall as defined by the aforementioned "provisional boundary lines", whose circle equivalent diameter is from 1 to 60 $\mu$m, and that satisfies the expression $L/\{2(\pi S)^{1/2}\} <\_ 1.1$; fields-of-view that do not include such a void are excluded.

(4) Specifying Apparent Area of Adsorbent Layer on Partition Wall:

A SEM observation image can be obtained by performing measurement in a field-of-view in which there are at least 35 division lines, drawn according to the aforementioned division width, in the length direction A of the observation image by setting the measurement magnification as appropriate. The obtained SEM observation image is subjected to the following process. As illustrated in Fig. 7, a line is drawn by connecting, with straight lines segments, intersection points between the aforementioned provisional boundary line and the respective division lines, which extend in the length direction A or the width direction B, and this line is found as the line defining the boundary of the adsorbent layer 12 on the substrate side (this line is called a "substrate-side boundary line" in distinction from the aforementioned "provisional boundary line"). Further, on the opposite side from the substrate 11, a line is drawn by connecting, with straight lines segments, intersection points between the edge of the adsorbent layer 12 as determined by the aforementioned provisional boundary line and the respective division lines, which extend in the length direction A or the width direction B, and this line is found as the line defining the boundary between the adsorbent layer 12 and the exterior (this line is called an "outer-side boundary line" in distinction from the aforementioned "provisional boundary line"). Hereinbelow, division lines extending in the length direction A are also referred to as "division lines A", and division lines extending in the width direction B are also referred to as "division lines B".

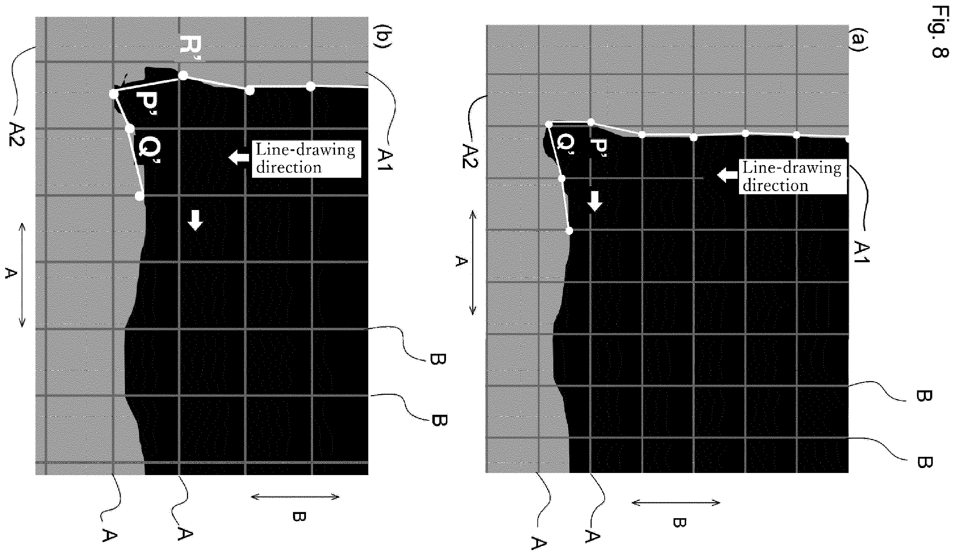

It should be noted that, as regards which intersection points, formed between the provisional boundary line and either the division lines A or division lines B, are to be connected in the observation image, first, the intersection points between the provisional boundary line and the respective division lines A are connected along the line-drawing direction (the direction along division line B), as illustrated in Fig. 8(a). At this time, for the observation image, an observation image is selected wherein the length of a section where the substrate 11 is present is different between the observation image's both edges in the width direction B (i.e., the two edges A1, A2 extending along the direction A), as in the example illustrated in Fig. 8(a). Next, in that observation image, the intersection points between the provisional boundary line and the division lines A are connected starting from the edge A1, in which the percentage of the section in which the substrate 11 is present is small, toward the other edge A2 side.

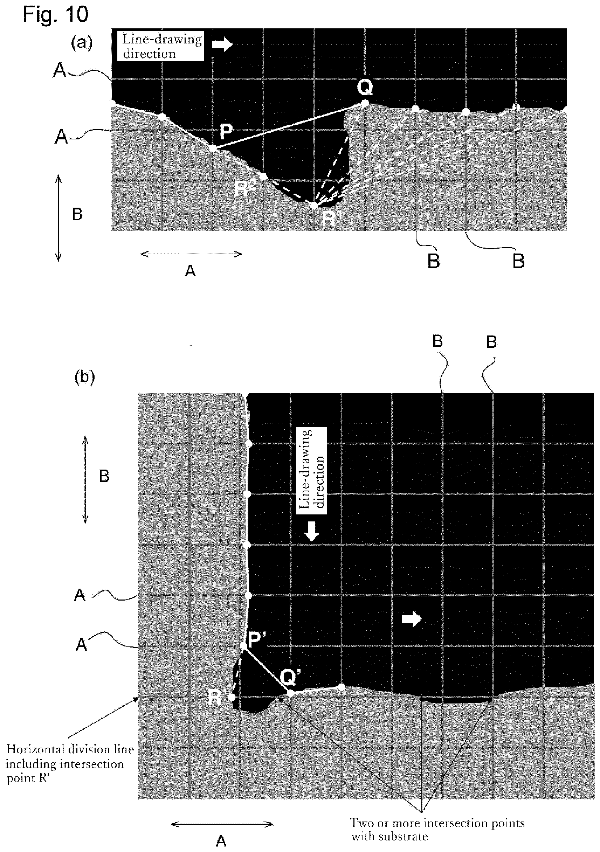

In cases where a single provisional boundary line intersects with two or more points with a single division line A, the intersection point closer in distance to the intersection point connected immediately before is selected, except in cases described further below in Fig. 10(b). In the example of Fig. 8(a), after connecting intersection point P' along the line-drawing direction, there is no further intersection point between the provisional boundary line and the next division line A. As in this case, when there is no further intersection point between the division line A and the provisional boundary line in the line-drawing direction, then, after returning to the immediately-prior intersection point P', this point P' is connected, with a straight line segment, to point Q', which is an intersection point between division line B and the provisional boundary line and closest to P' on the forward side (the A2 side in Fig. 8(a)) in the line-drawing direction more toward the front than the intersection point P'. Next, rendering is switched toward the direction along the direction A and opposite from the substrate 11 with respect to line segment P'Q', so as to connect the intersection points between division lines B and the provisional boundary line. This operation is continued unless a similar event occurs hereafter.

It should be noted that, in cases where there is no intersection point between division line B and the provisional boundary line on the downstream side, in the line-drawing direction, of the intersection point P' (Fig. 8(b)), then an intersection point between division line B and the provisional boundary line that is located closest to the intersection point P' is searched on the opposite side from the substrate 11 with respect to a straight line segment connecting the intersection point P' and the immediately-prior intersection point R', and rendering is switched toward the direction along the direction A and opposite from the substrate 11 with respect to line segment P'R', so as to connect the intersection points between division lines B and the provisional boundary line. This operation is continued unless a similar event occurs hereafter.

It should be noted that, in Figs. 8, 9, and 10, for the sake of explanation, the adsorbent layer 12 is omitted from illustration.

As will be described further below, as illustrated in Fig. 7, the area, in the observation image, surrounded by the substrate-side boundary line, the outer-side boundary line, the two division lines A' on the outermost side in the width direction B (the two division lines extending along the direction A and illustrated by bold lines in Fig. 7), and the two division lines B' on the outermost side in the length direction A (the two division lines extending along the direction B and illustrated by bold lines in Fig. 7) is determined as the apparent area of the adsorbent layer 12.

Hereinbelow, an exceptional example for defining the substrate-side boundary line will be described.

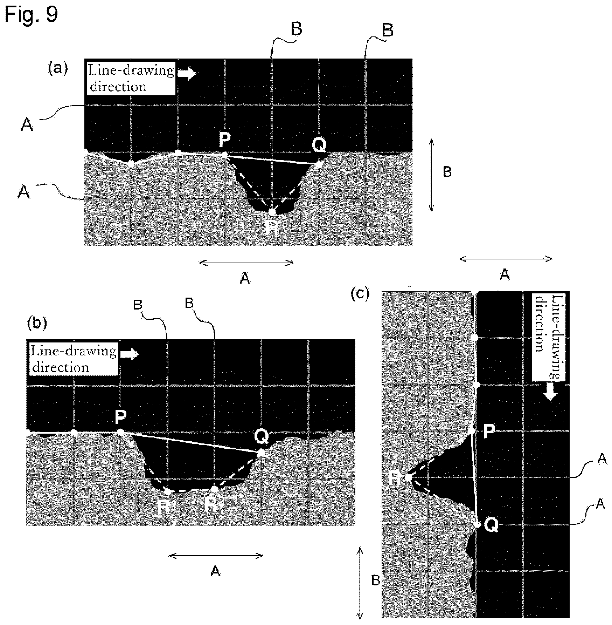

As illustrated by reference signs S1 and S2 in Fig. 7, in sections where the adsorbent material components have penetrated into the substrate 11, the substrate-side boundary line is set as follows. As for the penetration section S1 illustrated in Fig. 7, which is not a cell corner, when connecting the intersection points between the provisional boundary line and the division lines B along the line-drawing direction as illustrated in Fig. 9(a) and rendering a substrate-side boundary line by connecting intersection point P, intersection point R, and intersection point Q, which are intersection points between the division lines B and the provisional boundary line, if the variation width, in the width direction B, of the intersection point R adjacent to the intersection point P is greater than or equal to the division width, then that intersection point R is not used, and instead, line segment PQ, for which the variation width in the width direction B is less than the division width, is employed for the substrate-side boundary line.

Similarly, when connecting the intersection points between the provisional boundary line and the division lines B along the line-drawing direction in the direction A, if there are consecutive intersection points whose variation width in the width direction B relative to the intersection point P is greater than or equal to the division width (intersection points $R^1$ and $R^2$ in Fig. 9(b)), the intersection points whose variation width in the direction B relative to the intersection point P is greater than or equal to the division width (intersection points $R^1$ and $R^2$) are not used, and instead, line segment PQ, for which the variation width in the width direction B is less than the division width, is employed for the substrate-side boundary line. Figs. 9(a) and 9(b) are examples of connecting intersection points between the division lines B and the provisional boundary line, but the same applies to cases of connecting intersection points between the division lines A and the provisional boundary line. More specifically, when connecting the intersection points between the provisional boundary line and the division lines A along the line-drawing direction as illustrated in Fig. 9(c), if there is an intersection point (intersection point R in Fig. 9(c)) whose variation width, in the length direction A, relative to the intersection point P is greater than or equal to the division width, then that intersection point R is not used, and instead, line segment PQ with the next intersection point Q, for which the variation width in the length direction A is less than the division width, is employed for the substrate-side boundary line.

Note, however, that for example, when drawing a line by connecting the intersection points between the division lines B and the provisional boundary line as in Fig. 10(a), if there are five or more consecutive intersection points whose variation in the direction B is greater than or equal to the division width, then the following steps are taken.

As illustrated in Fig. 10(a), after drawing a line by connecting intersection point P, intersection point $R^2$, and intersection point $R^1$ in this order, five or more subsequent intersection points, including intersection point Q, have a variation in the direction B that is greater than or equal to the division width with respect to the intersection point $R^1$ serving as the starting point. In this case, intersection point $R^2$, which is one point before the intersection point $R^1$ currently serving as the starting point, is employed as the starting point. Next, with respect to the intersection point $R^2$ as the starting point, if there are five or more subsequent intersection points, including intersection point Q, having a variation that is greater than or equal to the division width with respect to the intersection point $R^2$ serving as the starting point, then intersection point P, which is one point before the intersection point $R^2$, is employed as the starting point. This intersection point P does not have a variation, with respect to the intersection point Q, that is greater than or equal to the division width in the direction B, which is the direction along which the division line connected to the intersection point extends. In this case, the straight line segment PQ, starting from the intersection point P, forms the substrate-side boundary line. For example, in Fig. 10(a), intersection points $R^1$ and $R^2$ are not used, and the straight line segment PQ is employed as the substrate-side boundary line. It should be noted that the same applies to cases of drawing a line by connecting intersection points between the division lines A and the provisional boundary line.

Further, in a section where the positional relationship between the adsorbent layer 12 and the substrate 11 changes at the corner, as in S2 of Fig. 7 for example, the substrate-side boundary line is defined as follows. As illustrated in Fig. 10(b), a division line A including intersection point R', which is adjacent to intersection point P' between another division line A and the provisional boundary line, has two or more intersection points with the provisional boundary line on the opposite side from the substrate 11 in the direction A with respect to the substrate-side boundary line formed by line segment P'R'. In such cases, intersection point Q' is used, which is an intersection point between the provisional boundary line and a division line B adjacent to P on the opposite side from the substrate in the direction A with respect to P'. The straight line segment P'Q' forms the substrate-side boundary line, and thereafter, the substrate-side boundary line is defined by similarly using the division lines B, unless the aforementioned event occurs.

(5) Specifying Area of Approximately-Perfect Circular Void:

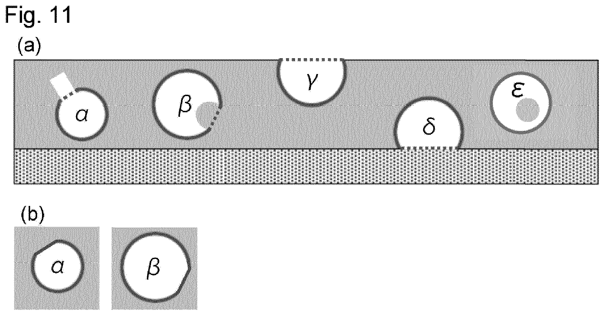

Next, the region surrounded by the substrate-side boundary line, the outer-side boundary line, the two A-direction division lines A' on the outermost side in the width direction B in the observation image, and the two B-direction division lines B' on the outermost side in the length direction A (hereinbelow also called 'region' with "apparent area"') is re-specified as the region of the adsorbent layer on the substrate 11 (Fig. 7). Along with re-specifying the region of the adsorbent layer on the substrate 11, re-specifying is also performed to find voids, and respective areas thereof, that are included within the newly-specified region with "apparent area", instead of within the "provisional boundary lines" as specified in (2) above, and that have a circle equivalent diameter of from 1 to 60 $\mu$m and satisfy the expression $L/\{2(\pi S)^{1/2}\} \leq 1.1$. At this time, the following approximation process (see Fig. 11) is performed, which was not performed in the aforementioned process for specifying the boundary lines.

There are substantially-circular voids, such as $\alpha$ and $\beta$ illustrated in Fig. 11(a), that are partially protruding or chipped, and whose actual perimeter and area thus do not satisfy the expression $L/\{2(\pi S)^{1/2}\} \leq 1.1$. Such substantially-circular voids are subjected to the following process. If the ratio of the length of a dotted-line segment (i.e., the length of the dotted line illustrated in Fig. 11(a)), which connects both ends of the protruding/chipped portion is 30% or less with respect to the perimeter other than the protruding/chipped portion (i.e., the length of the solid line as illustrated in Fig. 11(a)), then the range surrounded by the dotted line and the solid line is deemed as a void, and determination is made regarding whether or not the area surrounded by the dotted and solid lines and the perimeter, which is the total length of the dotted and solid lines, satisfy the expression $L/\{2(\pi S)^{1/2}\} \leq 1.1$. If satisfied, the void is included in the calculation of the circular void rate, by deeming the segment surrounded by the solid and dotted lines as the shape of the void. Fig. 11(b) illustrates virtual void shapes when $\alpha$ and $\beta$ have been deemed as above. On the other hand, if the aforementioned ratio exceeds 30%, the aforementioned process is not performed, and the area and perimeter are calculated according to the conventional method, to determine whether the expression $L/\{2(\pi S)^{1/2}\} \leq 1.1$ is satisfied. Voids, such as $\gamma$ and $\delta$ illustrated in Fig. 11(a), that are partially chipped by the substrate-side boundary line, the outer-side boundary line, the two division lines B on the outermost side in the length direction A, or the two division lines A on the outermost side in the width direction B, are subjected to the same process as that for $\alpha$ and $\beta$ by employing the void's perimeter other than the boundary line (i.e., the length of the solid line) and the boundary line segment of the void (i.e., the length of the dotted line). Voids partially chipped by division lines are also subjected to the same process as that for $\alpha$ and $\beta$. Further, in cases where absorbent material components etc. are encapsulated, as in the void $\epsilon$ in Fig. 11(a), voids satisfying the aforementioned expression and respective areas thereof are determined, considering the encapsulated components as non-existent.

According to the aforementioned process, the total area of the approximately-perfect circular voids that exist within the aforementioned region with "apparent area" and have a circle equivalent diameter of from 1 to 60 $\mu$m is found for the adsorbent layer 12 on the substrate 11, and the ratio of the total area with respect to the apparent area of the adsorbent layer 12 on the substrate 11 is calculated. The ratio is calculated for each of the fields-of-view, and the circular void rate is found as an average value for 20 fields-of-view. If, as a result of re-specifying the aforementioned region, any one of the fields-of-view ends up including no approximately-perfect circular void having a circle equivalent diameter of from 1 to 60 $\mu$m within the aforementioned region with "apparent area", another field-of-view is specified anew, and division lines are drawn in the new field-of-view according to the division width found as described above, and also, the region with "apparent area" is specified according to the aforementioned procedure using the EPMA observation image. In this way, the average value is found for 20 fields-of-view, each including at least one approximately-perfect circular void having a circle equivalent diameter of from 1 to 60 $\mu$m within the aforementioned region with "apparent area".

In the present invention, it will suffice if the circular void rate, as obtained by observing a total of 20 fields-of-view by observing at least one observation surface in a single sample Sp, satisfies the aforementioned range. For example, in cases where 20 fields-of-view are observed on each of a plurality of observation surfaces at different positions in the exhaust gas flow direction X and the circular void rate differs depending on the observation surface, it is determined that the present invention is satisfied if the circular void rate at any one of the observation surfaces satisfies the aforementioned range. This is the same for the later-described circle equivalent diameter, the number of approximately-perfect circular voids per 1 mm, and the thickness of the adsorbent layer 12.

In the adsorbent layer 12 on the substrate 11, as defined by the "substrate-side boundary line" and the "outer-side boundary line", the average value of the circle equivalent diameters of respective approximately-perfect circular voids is from 1 to 60 $\mu$m. In this range, it is possible to measure the circular void rate that contributes to delamination suppression and HC adsorption performance. From the viewpoint of further suppressing delamination and improving HC adsorption performance, the average value of the circle equivalent diameters is preferably from 5 to 50 $\mu$m, more preferably from 10 to 30 $\mu$m. The average value of the circle equivalent diameters is found by first calculating, for each field-of-view, the average value of the circle equivalent diameters for the respective approximately-perfect circular voids having a circle equivalent diameter from 1 to 60 $\mu$m, and then averaging the respective average values for the 20 fields-of-view ultimately used for finding the circular void rate.

It is preferable that the standard deviation of the circle equivalent diameters of approximately-perfect circular voids that are present in the adsorbent layer 12 on the substrate 11 and that have a circle equivalent diameter of from 1 to 60 $\mu$m is less than 25% with respect to the average value of the circle equivalent diameters. This indicates that the void former for forming the voids is present in the adsorbent layer 12 in a highly distributed state, which is advantageous in suppressing deterioration in adhesion of the adsorbent layer 12. It is preferable that the standard deviation of the circle equivalent diameters of approximately-perfect circular voids is 5% or greater with respect to the average value of the circle equivalent diameters. This indicates that the void former particles are not all lined up equally on the same observation surface, but are present slightly on the near side and/or the far side, thereby inhibiting excessive aggregation and maintaining a highly dispersed state. Highly dispersing the void former is preferable because it is advantageous to suppress deterioration in adhesion of the adsorbent layer 12. From these viewpoints, it is more preferable that the standard deviation of the circle equivalent diameters is from 10% to 23%, particularly preferably from 15% to 20%, with respect to the average value of the circle equivalent diameters. Further, it is preferable that the value of the standard deviation of the circle equivalent diameters is, for example, preferably from 0.1 to 15 $\mu$m, more preferably from 1.0 to 5.0 $\mu$m.

The average number of approximately-perfect circular voids having a circle equivalent diameter from 1 to 60 $\mu$m, per 1 $mm^2$ in apparent area of the adsorbent layer 12 present on the substrate 11, is preferably 50 or greater from the viewpoint of HC adsorption performance, and is preferably 25000 or fewer from the viewpoint of delamination suppression. From these viewpoints, the average number of approximately-perfect circular voids having a circle equivalent diameter from 1 to 60 $\mu$m is more preferably from 100 to 20000, even more preferably from 200 to 15000, per 1 $mm^2$ in terms of the aforementioned apparent area. The average number of approximately-perfect circular voids having a circle equivalent diameter from 1 to 60 $\mu$m, per 1 $mm^2$ in apparent area of the adsorbent layer 12, is the average value for the 20 fields-of-view ultimately used for finding the circular void rate.

The average thickness of the adsorbent layer 12 on the substrate 11 is preferably 10 $\mu$m or greater from the viewpoint of HC adsorption performance and formation of approximately-perfect circular voids, and preferably 100 $\mu$m or less from the viewpoint of maintaining pressure loss for practical use. From these viewpoints, the average thickness of the adsorbent layer 12 on the substrate 11 (partition wall 23) is more preferably from 15 to 60 $\mu$m, even more preferably from 20 to 50 $\mu$m. The average thickness of the adsorbent layer 12 on the substrate 11 (partition wall 23) is found in one observation image by dividing the apparent area of the adsorbent layer 12 on the substrate 11 by the length of the substrate-side boundary line in the observation image. In this way, the thickness of the adsorbent layer is found for each field-of-view. The average value of the thickness is calculated from each of the 20 fields-of-view ultimately used for finding the circular void rate.

The aforementioned circular void rate can be obtained by using, in the later-described suitable method for manufacturing the exhaust gas purification catalyst, a void former having a specific shape, thermal decomposition starting temperature, particle size distribution, and swelling degree in a solvent, and by appropriately adjusting the amount of the void former, the particle size of the void former, the particle size of particles in the absorbent material and other metal oxides in the slurry, the composition of the absorbent material and other metal oxides, and the later-described slurry viscosity. The same applies to the number of approximately-perfect circular voids, the circle equivalent diameter, the percentage of the standard deviation thereto, and the thickness of the adsorbent layer 12.

In the present invention, from the viewpoint of suppressing deterioration in adhesion of the adsorbent layer 12, it is particularly preferable that the circular void rate is 30% or less, and the value (%/$\mu$m) of the circular void rate (%) to the thickness of the adsorbent layer 12 ($\mu$m) is 0.20 (%/$\mu$m) or greater. The value of the circular void rate to the thickness of the adsorbent layer 12 is a value indicating the degree of aggregation of the void former used at the time of forming the adsorbent layer 12. The greater the degree of aggregation of the void former is at the time of forming the adsorbent layer 12, the smaller the circular void rate of the formed adsorbent layer 12 will be, and hence, the smaller the value of the circular void rate to the thickness of the adsorbent layer 12 will become. Applicant thinks that, by controlling the value of the circular void rate to the thickness of the adsorbent layer 12 to fall within the aforementioned range, circular voids will be formed in a sufficiently dispersed state in the adsorbent layer 12, and thus delamination can be suppressed effectively.

The upper limit of the value (%/μm) of the circular void rate (%) to the thickness of the adsorbent layer 12 (μm) is preferably 1.00 (%/μm) or less, from the viewpoint of suppressing delamination of the adsorbent layer 12 caused by the presence of too many voids. More preferably, the value of the circular void rate (%) to the thickness of the adsorbent layer 12 (μm) is from 0.30 (%/μm) to 0.80 (%/μm). The value (%/μm) of the circular void rate (%) to the thickness of the adsorbent layer 12 (μm) can be achieved by: using a void former having a specific shape, thermal decomposition starting temperature, particle size distribution, and swelling degree in a solvent; appropriately adjusting the amount of the void former, the particle size of the void former, the particle size of particles in the absorbent material and other metal oxides in the slurry, the composition of the absorbent material and other metal oxides; and further adjusting the later-described slurry viscosity.

From the viewpoint of further effectively balancing HC adsorption performance and delamination suppression, the pore volume attributable to pores in the adsorbent layer 12 and having a pore diameter from 1 to 300 nm is preferably within a range from 0.05 to 0.3 $cm^3/g$. For example, the method for measuring the pore volume may follow the Barrett-Joyner-Halenda (BJH) method pursuant to ISO 15901-2, to calculate the pore volume from the obtained nitrogen adsorption isotherm data. A desorption curve is used for the calculation, assuming that the molecular cross-sectional area of adsorbed nitrogen is 0.1620 $nm^2$. For the measurement device, BELSORP MAX II from MicrotracBEL Corp. can be used.

Examples of the Si-containing adsorbent material may include silica-alumina complex oxides, such as zeolites, silica, silica alumina phosphate (SAPO), etc. Using a zeolite is preferable from the viewpoint of further improving HC adsorption performance. A zeolite is a crystalline substance forming regular open micropores, wherein tetrahedral $TO_4$ units (T is the center atom) are linked three-dimensionally by sharing O atoms. More specifically, examples may include silicates, germanates, arsenates, etc., listed in the data collection from the Structure Commission of the International Zeolite Association (also referred to hereinafter as "IZA").

Herein, examples of silicates may include aluminosilicates, gall osilicates, ferrosilicates, titanosilicates, borosilicates, etc. Examples of germanates may include aluminogermanates, etc. Examples of arsenates may include aluminoarsenates. These may encompass examples wherein Si or Al in the framework is replaced by divalent/trivalent cations such as Ti, Ga, Mg, Mn, Fe, Co, Zn, etc. In the present embodiment, it is preferable to use a crystalline aluminosilicate as the zeolite. Zeolites have various forms in terms of crystal structure, and are classified into such types as BEA-type, MSE-type, MFI-type, YFI-type, FER-type, MOR-type, FAU-type, etc. Among the above, in the present invention, from the viewpoint of HC adsorption performance, it is preferable to employ a zeolite having at least one type of pore structure selected from 10-membered rings and 12-membered rings. Among the above, it is more preferable to employ at least one type selected from BEA-type, MSE-type, MFI-type, and YFI-type, because the pore diameter enables excellent properties of adsorbing toluene, propylene, pentane, etc., which are included in large amounts as HC molecule species in exhaust gas. It is particularly preferable to employ at least one type selected from BEA-type, MSE-type, and YFI-type having a 12-membered ring structure.

In cases of using a zeolite, it is preferable that the molar ratio of $SiO_2/Al_2O_3$ is from 5 to 500, more preferably from 5 to 250, particularly from 10 to 40, from the viewpoint of excellent HC adsorption performance and excellent heat resistance against high-temperature exhaust gas from gasoline engines etc.

A zeolite can support various elements from the viewpoint of improving functionalities. Examples of such elements may include P, Zr, Ga, Sn, B, K, and Cs. Particularly, it is preferable to contain P and/or Zr from the viewpoint of improving heat resistance, and it is most preferable to use both in combination. For example, P and Zr can be supported by the zeolite by modifying the zeolite with phosphoric acid ($H_3PO_4$) or zirconium oxynitrate and firing the same. In cases where the zeolite contains P, the amount thereof, in terms of phosphorus atoms, may preferably be from 0.5 to 10 mass%, more preferably from 1 to 5 mass%, with respect to the modified zeolite. In cases where the zeolite contains zirconium, the amount thereof, in terms of Zr atoms, may preferably be from 1 to 20 mass%, more preferably from 5 to 10 mass%, with respect to the modified zeolite. Herein, in cases where the zeolite is modified by one or more elements or compounds, the "amount of modified zeolite" refers to the amount including such elements or compounds. The amount of phosphorus and zirconium in the zeolite can be measured with an X-ray fluorescence device.

In the present Description, the expression 'component A is "supported by" particle B' refers to a state wherein the component A is physically/chemically adsorbed or retained on the outer surface of the particle B or the inner surface of the pores. More specifically, the fact that the component A is "supported by" the particles B can be determined, for example, by ascertaining that the component A and the particles B are present within the same region in elemental mapping obtained by analyzing the cross section of the exhaust gas purification catalyst 10 by EDS. Herein, "particles" encompass sintered bodies wherein particles have bonded together by firing.

The percentage of zeolite in the adsorbent layer 12 may be, for example, preferably from 30 to 95 mass%, more preferably from 50 to 90 mass%, particularly preferably from 57 to 80 mass%, from the viewpoint of HC adsorption performance and adhesion.

Components, other than the Si adsorbent material, that may be included in the adsorbent layer 12 may include, for example, alumina, titania, zirconia, ceria, ceria-zirconia, activated carbon, metal-organic frameworks (MOF), etc. Particularly, alumina can preferably be used from the viewpoint of excellent heat resistance. The amount of metal oxides, other than the Si adsorbent material, that may be included in the adsorbent layer 12 may be, for example, preferably from 5 to 50 mass%, particularly preferably from 10 to 43 mass%, in the adsorbent layer 12.

The adsorbent layer 12 may include a catalytically-active component. Examples of the catalytically-active component may include platinum metals, and concrete examples may include one or two or more types of metals selected from platinum (Pt), palladium (Pd), rhodium (Rh), ruthenium (Ru), iridium (Ir), and osmium (Os). From the viewpoint of the performance for purifying HC etc., it is preferable that the adsorbent layer 12 includes, as the catalytically-active component, at least one type of metal selected from platinum (Pt), palladium (Pd), and rhodium (Rh). In cases where the adsorbent layer 12 includes a catalytically-active component, the amount thereof is preferably from 0.05 to 5 mass%, more preferably from 0.5 to 2.5 mass%.

The adsorbent layer 12 may include at least one type of transition metal selected from Cu, Ag, Ni, Fe, and Mn. Including such a transition metal in the adsorbent layer, which includes the Si-containing adsorbent material, is preferable, because HC retainability in high-temperature ranges can be improved.

The amount of zeolite, the amount of inorganic oxides such as alumina, the amount of transition metals, and the amount of catalytically-active components in the adsorbent layer 12 can be measured, for example, by measuring, with ICP-AES, the amount of elements of the various components in a solution obtained by entirely dissolving the adsorbent layer 12.

From the viewpoint of improving HC adsorption performance etc., it is preferable that the mass of the adsorbent layer 12, in dried mass, is 30 g or more, more preferably 50 g or more, per 1 L in volume of the substrate 11 in a portion where the adsorbent layer 12 has been formed. From the viewpoint of improving delamination resistance etc., it is preferable that the mass of the adsorbent layer 12, in dried mass, is 200 g or less, more preferably 150 g or less, per 1 L in volume of the substrate 11 in a portion where the adsorbent layer 12 has been formed. Herein, the "volume of the substrate 11" refers to the apparent volume, including the partition walls 23 of the substrate 11, the adsorbent layer 12, the other layer 13 (if the other layer 13 is included), the pores in the partition walls 23, and the space within the cells 15. In cases where the substrate 11 is circular-cylindrical, the apparent volume of the substrate 11 is expressed as $\pi \times A^2 \times B$, where 2A is the outer diameter of the substrate 11, and B is the length of the substrate 11. The "volume of the substrate 11 in a portion where the adsorbent layer 12 has been formed" refers to the volume calculated as follows: Apparent volume of the substrate 11 $\times$ Length of the adsorbent layer 12 in the X direction / Length of the substrate 11 in the X direction.

As illustrated in Figs. 3(b) and 3(c), in cases where the exhaust gas purification catalyst 10 includes another layer 13, in addition to the adsorbent layer 12, as the coating layer 16, it is preferable that the other layer 13 includes a catalytically-active component. In this case, the catalytically-active component may be the same component as the catalytically-active component that may be provided in the adsorbent layer 12. It is preferable that the other layer 13 includes, as a component for supporting the catalytically-active component, inorganic oxides serving as oxygen storage components, as well as inorganic oxides other than oxygen storage components. Examples of oxygen storage components may include $CeO_2$, CZ materials (ceria-zirconia complex oxides including Ce and Zr, or solid solutions of $CeO_2$ and $ZrO_2$), iron oxide, and copper oxide. In addition to the above, oxides of rare-earth elements other than Ce can be used. Further, examples of inorganic oxides other than oxygen storage components may include alumina, titania, zirconia, etc.

In cases where the exhaust gas purification catalyst 10 includes the adsorbent layer 12 and the other layer 13 as the coating layer 16 on the substrate 11, it is preferable that the percentage of the adsorbent layer 12 with respect to the entire coating layer 16 on the substrate 11 is preferably 20 mass% or greater, more preferably from 20 to 50 mass%.

In cases where the exhaust gas purification catalyst 10 includes the adsorbent layer 12 and the other layer 13 as the coating layer 16 on the substrate 11, it is more preferable that the percentage of the thickness of the adsorbent layer 12 is from 20% to 80% with respect to the total thickness of the entire coating layer 16 present on the substrate 11. The thickness of the adsorbent layer 12 can be measured according to the aforementioned method. Also, the thickness of the coating layer 16 can be measured according to the method for measuring the thickness of the adsorbent layer 12.

The configuration of the exhaust gas purification catalyst 10 is described in further detail.

From the viewpoint of further improving HC adsorption performance and improving exhaust gas purification performance during high-speed operation, it is preferable that, in cases where the adsorbent layer 12 is provided in direct contact with the partition wall 23, the adsorbent layer 12 is present mainly on the surface of the partition wall 23 and not inside the partition wall 23. "The adsorbent layer 12 is present mainly on the surface of the partition wall 23" means that, in a cross section of the substrate 11 on which the adsorbent layer 12 is provided, the mass of the adsorbent layer 12 present on the surface of the substrate 11's partition wall 23 is greater than the mass of the adsorbent layer 12 present inside the partition wall 23. For example, the presence of the adsorbent layer mainly on the surface can be ascertained by: observing a cross section of the partition wall on which the adsorbent layer 12 is provided with a scanning electron microscope (JEM-ARM200F from JEOL Ltd.); and analyzing the cross section with energy dispersive X-ray spectrometry (EDS: Energy dispersive X-ray spectrometry), to thereby perform line analysis of the boundary between an element (such as Mg etc.) that exists in the substrate 11 and an element (such as Si, or a specific element present in the adsorbent layer) that exists in the adsorbent layer 12; or analyzing with an electron probe micro analyzer (EPMA).

It should be noted that, from the viewpoint of improving HC adsorption performance while reducing delamination, the length of the adsorbent layer 12 in the X direction is preferably from 50% to 100%, more preferably from 70% to 100%, with respect to the length of the substrate 11 in the X direction. The length of the adsorbent layer 12 can be measured according to the following method. That is, it is preferable to observe the exhaust gas purification catalyst 10 with the eyes to specify the boundary of the adsorbent layer 12, and then measure the length. At this time, it is preferable to measure the length of the adsorbent layer 12 at, for example, ten discretionary sites in the exhaust gas purification catalyst 10, and find the average value thereof as the length of the adsorbent layer 12. In cases where it is impossible to visually determine the boundary, in the exhaust gas flow direction, of the adsorbent layer 12, then the boundary can be specified by analyzing the composition at a multitude of positions (for example, at 8 to 16 sites) of the exhaust gas purification catalyst along the exhaust gas flow direction, and finding the concentration of the catalytically-active component at each site. The concentration of the catalytically-active component at each site can be found by, for example, X-ray fluorescence analysis (XRF) or ICP optical emission spectrometry (ICP-AES).

Next, a preferable method for manufacturing an exhaust gas purification catalyst according to the present invention is described below.

The present manufacturing method is a method for manufacturing an exhaust gas purification catalyst, the method involving:

a step of applying a slurry to a substrate, the slurry containing

an adsorbent material containing Si (Si-containing adsorbent material), and

a void former constituted by a crosslinked resin, wherein the percentage of particles having a roundness of $L'/\{2(\pi S')^{1/2}\} \leq 1.05$ is 90% or higher in terms of the number of particles (also referred to hereinafter simply as "the void former"); and

a step of firing the slurry after being applied to the substrate, to form, on the substrate, an adsorbent layer including the adsorbent material and voids formed by firing and eliminating the void former, wherein:

after stirring the slurry at a rotation speed of from 3000 to 8000 rpm, the slurry is applied to the substrate in a state where the viscosity at 25°C is from 2000 to 100000 cP. (Note that L' is an outer perimeter of the void former in an image obtained by observing the void former with a scanning electron microscope (SEM), and S' is an area of the void former in an image obtained by observation with a scanning electron microscope.)

In the void former, the percentage of particles having a "roundness of $L'/\{2(\pi S')^{1/2}\} \leq 1.05$" is 90% or higher in terms of the number of particles. With this configuration, an exhaust gas purification catalyst 10 having the aforementioned circular void rate can be obtained easily. Herein, the "roundness" is measured based on observation with a SEM. A sample to be observed can be obtained by: bonding a carbon tape onto a SEM sample stage; dropping, from above onto the stage, a powder sample attached to a cotton bud; and then blowing away excessive powder with an air gun. As regards the conditions for conducting blowing with an air gun, air may be blown from a position separated by 10 cm at 5 atmospheres (gauge pressure) for 1 second, although the condition is not limited thereto.

SEM observation is preferably performed at an acceleration voltage of 5 to 15 kV under an observation magnification of 40x to 1000x. SEM images of 50 pieces of discretionarily-selected void former particles are observed, to find the percentage of particles whose outer shape in the SEM image has a roundness of $L'/\{2(\pi S')^{1/2}\} \leq 1.05$.

From the viewpoint of easily achieving HC adsorption performance and delamination resistance, the percentage of void former particles having a "roundness of $L'/\{2(\pi S')^{1/2}\} \leq 1.05$", among the aforementioned void former particles, is more preferably 95% or higher, even more preferably 98% or higher.

Examples of materials for the void former may include polymers of monomers including crosslinkable monomers and having an ethylenically unsaturated bond, with usable examples including crosslinkable acrylic resin and crosslinkable styrene resin. Particularly, it is possible to use, for example, crosslinked polystyrene particles or crosslinked poly(meth)acrylic ester particles. Examples of crosslinked poly(meth)acrylic ester particles may include crosslinked poly(methyl (meth)acrylate) particles and crosslinked poly(butyl (meth)acrylate) particles. By using a crosslinked resin for the void former, voids having a high degree of roundness can easily remain in the adsorbent layer 12 without loss of shape during firing.

The void former preferably has a thermal decomposition starting temperature of 200°C or higher in the atmosphere. Void formers with a high thermal decomposition temperature typically have molecular chains with a high degree of crosslinking. This prevents the shape of the particles from getting deformed during firing, thereby allowing voids with high roundness to remain within the adsorbent layer 12. The thermal decomposition starting temperature of the void former in the atmosphere is more preferably 230°C or higher, particularly preferably 250°C or higher. From the viewpoint of eliminating the void former reliably during firing, the upper limit of the thermal decomposition starting temperature is preferably 550°C or lower, more preferably 500°C or lower. As regards the thermal decomposition starting temperature, for example, the thermal decomposition behavior is measured in the atmosphere by raising the temperature from room temperature to 500°C. The temperature rise rate may be from 5°C/minute to 20°C/minute, for example. The thermal decomposition starting temperature is determined as the intersection point between: a line parallel to the horizontal axis and passing through the mass before starting of test heating; and a tangent drawn so as to maximize the gradient between inflection points in the decomposition curve. In the Examples below, the thermal decomposition starting temperature in the atmosphere is simply described as "thermal decomposition starting temperature".

When the particle size of the void former at a cumulative volume of 10%, as measured according to the laser diffraction particle size distribution method, is defined as D10, the particle size at a cumulative volume of 50% is defined as D50, and the particle size at a cumulative volume of 90% is defined as D90, the value of (D90-D10)/D50 is preferably from 0.1 to 1.1. The value of (D90-D10)/D50 (hereinbelow also called "monodispersity") serves as a yardstick indicating the distribution in particle size of the void former; the smaller the value of the monodispersity, the sharper the particle size distribution. Void former particles with a sharp particle size distribution have a high degree of crosslinking, and are thus even more excellent in terms that deformation of the void former is further suppressed during firing due to thermal expansion, thereby allowing the aforementioned circular void rate to be achieved more easily. From this viewpoint, the monodispersity of the void former is more preferably 0.7 or less, particularly preferably 0.3 or less. From the viewpoint of obtaining voids having the aforementioned circle equivalent diameter, D50 of the void former is preferably from 5 to 50 $\mu$m, more preferably from 10 to 30 $\mu$m. From the viewpoint of monodispersity, D90 of the void former is preferably from 6 to 60 $\mu$m, more preferably from 10 to 30 $\mu$m. From the same viewpoint, D10 is preferably from 1 to 30 $\mu$m, more preferably from 2 to 20 $\mu$m. The monodispersity and particle size can be measured by using, for example, a laser diffraction/scattering method particle size/particle size distribution measurement device, such as Microtrac HRA or the Microtrac 3000 series from MicrotracBEL Corp. For example, measurement can be performed as follows. An automatic sample delivery device (Microtrac SDC from MicrotracBEL Corp.) for a laser diffraction particle size distribution measurement device is used, to deliver the void former into an aqueous dispersion medium. At a flow rate of 40%, ultrasonic waves at 40 W are applied for 360 seconds. Then, measurement is performed using a laser diffraction/scattering method particle size distribution analyzer (Microtrac MT3300 EXII from MicrotracBEL Corp.). The measurement conditions are as follows: particle refractive index: 1.5; particle shape: perfect sphere; solvent refractive index: 1.3; set zero: 30 seconds; measurement time: 30 seconds. Measurement is performed twice, and the average value is calculated. Pure water is used as the aqueous dispersion medium.

It is also preferable that the void former has a low swelling degree in a solvent. This is because void formers with a low swelling degree have a high degree of crosslinking. For example, the solvent absorption amount (g/g) per 1 g of polymer after immersion at 50°C for 48 hours is preferably 0.05 g/g or less in ethanol, preferably 0.7 g/g or less in acetone, preferably 0.15 g/g or less in 2-methoxyethanol, and preferably 0.15 g/g or less in toluene.

In the present manufacturing method, it is preferable that the percentage of the aforementioned void former particles within all the void former particles to be used for forming the adsorbent layer is preferably 80 mass% or higher, more preferably 90 mass% or higher, particularly preferably 100 mass%.

The slurry including the void former further contains Si-containing adsorbent material particles, and preferably includes metal oxide particles. Examples of the Si-containing adsorbent material particles and other metal oxide particles may include inorganic oxide particles described above as constituent components of the adsorbent layer 12.

From the viewpoint of improving the dispersibility of the catalytically-active component and improving HC adsorption performance, D50 of the particle size of the metal oxide particles including the Si-containing adsorbent material particles is preferably 3 $\mu$m or greater and D90 thereof is preferably 10 $\mu$m or greater, and further, D50 is more preferably 3 $\mu$m or greater and D90 is more preferably 12 $\mu$m or greater. From the viewpoint of improving the dispersibility of the catalytically-active component, the upper limit of D50 of the particle size of the metal oxide particles in the slurry is more preferably 15 $\mu$m or less and D90 thereof is more preferably 30 $\mu$m or less.

D50 and D90 of the metal oxide particles can be measured according to the same method as that for D50 and D90 of the void former.

D50 of the particle size of particles in the slurry including the void former is preferably 2 $\mu$m or greater and D90 thereof is 8 $\mu$m or greater, and further, D50 is more preferably 3 $\mu$m or greater and D90 is more preferably 9 $\mu$m or greater. D50 is preferably 40 $\mu$m or less and D90 is preferably 120 $\mu$m or less, and further, D50 is more preferably 30 $\mu$m or less and D90 is more preferably 70 $\mu$m or less.

Inventors have found that, if a slurry containing a Si-containing adsorbent material and the aforementioned void former is applied as-is to a substrate, it is not possible to obtain an exhaust gas purification catalyst having sufficient delamination resistance, and it is also difficult to obtain an exhaust gas purification catalyst wherein the adsorbent layer 12 has the aforementioned circular void rate. Inventors have also found that by applying the slurry to a substrate in a state where the slurry has a predetermined viscosity after being stirred at a predetermined rotation speed, it is possible to obtain an exhaust gas purification catalyst having high delamination resistance and excellent HC adsorption performance, and it is also easy to obtain an adsorbent layer having the aforementioned circular void rate. The reasons therefor are thought to be as follows. Si-containing adsorbent materials, such as zeolites, are hydrophobic, and thus tend to aggregate in a slurry that uses water. Similarly, perfect circular void formers made from crosslinked resins are also hydrophobic. So, in cases where a Si-containing adsorbent material is used in combination with the aforementioned void former, if the stirred state is insufficient or the viscosity is below a predetermined value, the void former will not be dispersed sufficiently within the slurry, and large voids will thus be formed, which may impair the tight-adhesion to the substrate 11 or other layers 13. Stated differently, there have conventionally been known methods of adding a void former to a purification layer-forming slurry at the time of forming a purification layer on a substrate, but Inventors have found that, if such conventional methods are employed when adding a void former to a slurry that contains a Si-containing adsorbent material, the Si-containing adsorbent material, which is hydrophobic, is likely to interact and aggregate with the void former, which is also hydrophobic, within the slurry. To address this, Inventors have found that, by achieving a predetermined stirred state and controlling the usage viscosity within an appropriate range, the dispersibility of the Si-containing adsorbent material and the void former can be improved, and it is possible to successfully manufacture an exhaust gas purification catalyst having the aforementioned circular void rate and having excellent delamination resistance and HC adsorption performance. From this viewpoint, in the present manufacturing method, it is preferable that the slurry is applied to a substrate in a state satisfying a viscosity of 2000 to 100000 cP after being stirred at a rotation speed of 3000 to 8000 rpm. When the rotation speed is 3000 rpm or higher and the viscosity is 2000 cP or higher, it is possible to achieve the aforementioned aggregation inhibition effect. Further, when the rotation speed is 8000 rpm or lower, physical breakage of the void former can be inhibited readily. When the viscosity is 100000 cP or lower, the slurry will have good coating performance. From these viewpoints, it is more preferable that the slurry is applied to a substrate in a state satisfying a viscosity of 3000 to 50000 cP after being stirred as above, and particularly preferable that the slurry is applied to a substrate in a state satisfying a viscosity of 5000 to 20000 cP after being stirred as above. Further, the rotation speed for stirring is more preferably from 5000 to 8000 rpm, and the temperature of the slurry at the time of viscosity measurement is, for example, 25°C. Further, "viscosity after being stirred" preferably refers to the viscosity measured within 30 minutes from stirring, and more preferably refers to the viscosity measured within 10 minutes. A thickener may be employed to adjust the viscosity. Examples of thickeners may include xanthan gum, carboxymethyl cellulose, hydroxypropylmethyl cellulose, hydroxyethyl cellulose, etc.

Note that, for 2500 g of slurry, the stirring time is preferably from 5 to 20 minutes, more preferably from 10 to 15 minutes. If the amount of slurry is changed, the preferable stirring time can be increased/decreased in proportion to the ratio by which the amount of slurry has been increased/decreased.

Further, it is preferable to apply the stirred slurry to a substrate within 60 minutes from measuring the viscosity. Herein, "apply to a substrate" encompasses applying the slurry onto another layer 13 in cases where another layer 13 is already formed on the substrate.

From the viewpoint of readily obtaining the aforementioned viscosity, it is preferable that, in the adsorbent layer-forming slurry, the amount of solid content excluding the void former is preferably from 20 to 40 mass%, more preferably from 25 to 35 mass%.

Further, the amount of the void former with respect to the solid content in the adsorbent layer-forming slurry excluding the void former is, for example, preferably 10 mass% or more to less than 75 mass%, more preferably from 20 to 60 mass%, particularly preferably from 30 to 50 mass%.

In the first step, the slurry including the aforementioned constituent components is applied to the partition wall. An example of a method for applying the slurry to the partition wall may include, although not limited thereto, immersing one end, in the exhaust gas flow direction, of the substrate in the slurry and sucking the slurry from the opposite side. In cases of drying the slurry before firing, the drying temperature is preferably from 40°C to 120°C. Firing is typically performed in the atmosphere. The firing temperature may preferably be, for example, from 350°C to 550°C.

The exhaust gas purification catalyst 10 manufactured as above can be used for various applications, by taking advantage of its delamination prevention performance and HC adsorption performance, as exhaust gas purification catalysts for internal combustion engines, such as gasoline engines, that employ fossil fuel as a source of power. Further, the present embodiment can also provide an exhaust gas purification method using the exhaust gas purification catalyst 10. For example, by providing the exhaust gas purification catalyst 10 in an exhaust path of an internal combustion engine such as a gasoline engine and making use of the HC adsorption performance, exhaust gas from the gasoline engine can be purified favorably. Particularly, in cases of use in an exhaust gas purification device including two or more exhaust gas purification catalysts arranged along the exhaust gas flow direction, it is preferable to use the exhaust gas purification catalyst 10 as the second or subsequent catalyst from the upstream side. The reason to this is that, because of constraints in the applicable amount of slurry due to the nature of organic substancetrapping catalysts, using the present exhaust gas purification catalyst for the first catalyst, which is subjected to high thermal load, will promote degradation, whereas using it for the second or subsequent catalyst can favorably maintain high purification performance and HC adsorption performance.

Examples

The present invention is described in further detail below by way of Examples. The scope of the present invention, however, is not limited to the Examples. Note that drying and firing were all performed in the atmosphere. The thermal decomposition starting temperature in each example was measured in the atmosphere. It should be noted that, hereinbelow, "solid content" refers to an amount excluding the void former. Further, in each of the Examples and Comparative Examples, the conditions for adding the thickener (the type and amount) were the same.

In each of the Examples and Comparative Examples, the conditions for stirring the slurry were as follows.

{Stirring Conditions}

A 15-cm-dia. cylindrical container was charged with 2500 g of slurry to a vertical level of 15 cm, and the slurry was stirred for 10 minutes using a mechanical stirrer with a 4-cm-long cross-shaped stirring blade.

The viscosity of the slurry was measured at 25°C using a digital viscometer (model number: DV-E) from Brookfield within 10 minutes after stirring. The spindle was LV-2 (No. 62) for Comparative Examples 4 and 5, LV-4 (No. 64) for Examples 6 and 8, and LV-3 (No. 63) for all the rest. The rotation speed was 12 rpm, and the viscosity was measured in a state after at least 5 turns from the start of rotation.

In each of the Examples, the pore volume ascribable to pores in the adsorbent layer having pore diameters of 1 to 300 nm was within the range of 0.05 to 0.3 $cm^3$/g.

Further, in each of the Examples, the method for measuring the particle size of particles in the slurry was the same as the aforementioned method for measuring the particle size of the void former. Note, however, that the particles in the slurry were not drained, and instead of the dispersion liquid in which the void former was dispersed in an aqueous dispersion medium, the slurry was supplied as-is to the automatic sample delivery device for the laser diffraction particle size distribution measurement device and was subjected to ultrasonic treatment.

{Example 1}

1. Preparation of Adsorbent Layer-Forming Slurry:

Zeolite powder (BEA-type; molar ratio of $SiO_2/Al_2O_3$: 40; 2.3 mass% of phosphorus atoms; 6.6 mass% of zirconium atoms) and alumina powder were prepared. The zeolite powder and the alumina powder were mixed, and immersed in pure water such that the solid content was 30 mass%.

Next, to this suspension were mixed: a spherical void former (crosslinked poly(methyl (meth)acrylate) particles; D50: 20 $\mu$m; D90: 22 $\mu$m; D10: 18 $\mu$m; monodispersity: 0.165; thermal decomposition starting temperature: 250°C; roundness rate: 95%; solvent absorption amount (g/g) per 1 g of polymer after immersion at 50°C for 48 hours: 0.02 g/g in ethanol, 0.24 g/g in acetone, 0.05 g/g in 2-methoxyethanol, and 0 g/g in toluene); boehmite powder; and alumina sol. Further, a thickener was added. Then, stirring was conducted according to the aforementioned stirring conditions at a rotation speed of 7000 rpm for 10 minutes, to prepare an adsorbent layer-forming slurry. The viscosity of the adsorbent layer-forming slurry was 6800 cP. Note that "roundness rate" indicates the rate, in terms of number, of particles satisfying $L/\{2(\pi S)^{1/2}\} \leq 1.05$ among the spherical particles of the void former. With respect to 100 parts by mass of components, other than the void former, in the solid content of the slurry, the content of the zeolite powder was 60 parts by mass, the alumina powder was 30 parts by mass, the boehmite powder was 5 parts by mass, and the alumina sol was 5 parts by mass. The mass percentage of the void former was 30% with respect to the solid content of the slurry. The amount of the thickener was adjusted to achieve the aforementioned predetermined viscosity. D50 in the slurry was 9 $\mu$m, and D90 was 18 $\mu$m. SEM observation for measuring the roundness of the void former, serving as a raw material, was performed at an acceleration voltage of 15 kV and an observation magnification of 300x.

2. Forming Adsorbent Portion Precursor Layer (Adsorbent Portion before being Fired):

For the substrate, a flow-through substrate was used. The substrate had a volume of 0.174 L and an entire length of 30 mm, and included, in a plane orthogonal to the axial direction, 600 cells/inch$^2$ of cells extending in the axial direction and divided/partitioned by partition walls each having a thickness of 80 to 100 $\mu$m.

A portion of the substrate amounting to 10% to 50% of the entire length in the exhaust gas flow direction from one end surface of the substrate was immersed in the adsorbent layer-forming slurry, and suction was conducted from the other end surface. The suction-side surface was similarly immersed in the adsorbent layer-forming slurry, and suction was conducted from the one end surface. Then, the slurry was dried at 90°C for 10 minutes, to form an adsorbent portion precursor layer constituted by the solid content of the adsorbent layer-forming slurry.

3. Firing:

The substrate was then fired at 450°C for 1 hour. This yielded an exhaust gas purification catalyst of Example 1 having an adsorbent portion formed on the substrate.

In the exhaust gas purification catalyst of Example 1, the adsorbent portion was formed on each partition wall's surface ranging over the entire length L in the exhaust gas flow direction X. The mass of the adsorbent portion, in terms of mass after firing, was 97.9 g/L with respect to the volume of the substrate in a section where the adsorbent portion was formed.

{Example 2}

As regards the void former in the adsorbent layer-forming slurry of Example 1, the mass percentage of the void former with respect to the solid content of the slurry was changed to 10%. According to the aforementioned stirring conditions, the adsorbent layer-forming slurry was prepared by stirring at a rotation speed of 7000 rpm for 10 minutes. The viscosity of the adsorbent layer-forming slurry was 7500 cP. D50 in the slurry was 8 $\mu$m, and D90 was 17 $\mu$m. Other than the above, an exhaust gas purification catalyst was obtained as in Example 1.

{Example 3}

As regards the void former in the adsorbent layer-forming slurry of Example 1, the mass percentage of the void former with respect to the solid content of the slurry was changed to 20%. According to the aforementioned stirring conditions, the adsorbent layer-forming slurry was prepared by stirring at a rotation speed of 7000 rpm for 10 minutes. The viscosity of the adsorbent layer-forming slurry was 7300 cP. D50 in the slurry was 9 $\mu$m, and D90 was 18 $\mu$m. Other than the above, an exhaust gas purification catalyst was obtained as in Example 1.

{Example 4}

As regards the void former in the adsorbent layer-forming slurry of Example 1, the mass percentage of the void former with respect to the solid content of the slurry was changed to 40%. According to the aforementioned stirring conditions, the adsorbent layer-forming slurry was prepared by stirring at a rotation speed of 7500 rpm for 10 minutes. The viscosity of the adsorbent layer-forming slurry was 6300 cP. D50 in the slurry was 10 $\mu$m, and D90 was 20 $\mu$m. Other than the above, an exhaust gas purification catalyst was obtained as in Example 1.

{Example 5}

As regards the void former in the adsorbent layer-forming slurry of Example 1, the mass percentage of the void former with respect to the solid content of the slurry was changed to 50%. According to the aforementioned stirring conditions, the adsorbent layer-forming slurry was prepared by stirring at a rotation speed of 7500 rpm for 10 minutes. The viscosity of the adsorbent layer-forming slurry was 5500 cP. D50 in the slurry was 12 $\mu$m, and D90 was 23 $\mu$m. Other than the above, an exhaust gas purification catalyst was obtained as in Example 1.

{Example 6}

The void former in the adsorbent layer-forming slurry of Example 1 was changed to a spherical void former (crosslinked poly(methyl (meth)acrylate) particles; D50: 5 $\mu$m; D90: 7 $\mu$m; D10: 3 $\mu$m; monodispersity: 0.120; thermal decomposition starting temperature: 250°C; roundness rate: 95%; solvent absorption amount (g/g) per 1 g of polymer after immersion at 50°C for 48 hours: 0.03 g/g in ethanol, 0.43 g/g in acetone, 0.08 g/g in 2-methoxyethanol, and 0.02 g/g in toluene). The mass percentage of the void former with respect to the solid content of the slurry was changed to 50%. According to the aforementioned stirring conditions, the adsorbent layer-forming slurry was prepared by stirring at a rotation speed of 7500 rpm for 10 minutes. The viscosity of the adsorbent layer-forming slurry was 19800 cP. D50 in the slurry was 5 $\mu$m, and D90 was 12 $\mu$m. Other than the above, an exhaust gas purification catalyst was obtained as in Example 1.

{Example 7}

The void former in the adsorbent layer-forming slurry of Example 1 was changed to a spherical void former (crosslinked poly(methyl (meth)acrylate) particles; D50: 50 $\mu$m; D90: 80 $\mu$m; D10: 28 $\mu$m; monodispersity: 1.039; thermal decomposition starting temperature: 250°C; roundness rate: 90%; solvent absorption amount (g/g) per 1 g of polymer after immersion at 50°C for 48 hours: 0.04 g/g in ethanol, 0.66 g/g in acetone, 0.12 g/g in 2-methoxyethanol, and 0.12 g/g in toluene). The mass percentage of the void former with respect to the solid content of the slurry was changed to 20%. According to the aforementioned stirring conditions, the adsorbent layer-forming slurry was prepared by stirring at a rotation speed of 7000 rpm for 10 minutes. The viscosity of the adsorbent layer-forming slurry was 4800 cP. D50 in the slurry was 28 $\mu$m, and D90 was 85 $\mu$m. Other than the above, an exhaust gas purification catalyst was obtained as in Example 1.

{Example 8}

In Example 1, the respective amounts of zeolite, alumina powder, alumina sol, and boehmite sol were increased at the same rate, and the solid content of the slurry was changed to 32 mass%. According to the aforementioned stirring conditions, the adsorbent layer-forming slurry was prepared by stirring at a rotation speed of 7000 rpm for 10 minutes. The viscosity of the adsorbent layer-forming slurry was 11000 cP. D50 in the slurry was 8 $\mu$m, and D90 was 19 $\mu$m. The mass of the adsorbent portion, in terms of mass after firing, was 120.3 g/L with respect to the volume of the substrate in a section where the adsorbent portion was formed. Other than the above, an exhaust gas purification catalyst was obtained as in Example 1.

{Example 9}

The zeolite powder in the adsorbent layer-forming slurry of Example 1 was changed to MSE-type zeolite (molar ratio of $SiO_2/Al_2O_3$: 200). According to the aforementioned stirring conditions, the adsorbent layer-forming slurry was prepared by stirring at a rotation speed of 7500 rpm for 10 minutes. The viscosity of the adsorbent layer-forming slurry was 8800 cP. D50 in the slurry was 9 $\mu$m, and D90 was 19 $\mu$m. Other than the above, an exhaust gas purification catalyst was obtained as in Example 1.

{Example 10}

1. Preparation of Upper Layer-Forming Slurry:

$CeO_2$-$ZrO_2$ solid solution powder (including, in $CeO_2$-$ZrO_2$ solid solution, 40 mass% of $CeO_2$, 50 mass% of $ZrO_2$, and 10 mass% of an oxide of a rare-earth element other than Ce) and alumina powder were prepared. The $CeO_2$-$ZrO_2$ solid solution powder and the alumina powder were mixed, and immersed in a palladium nitrate aqueous solution.
Next, alumina sol, zirconia sol, and water as a liquid solvent were mixed to this suspension, to prepare a slurry for an upper layer as an example of the "other layer".

2. Layering of Upper Layer:

Using the substrate after forming the adsorbent layer precursor layer in Example 1, a portion of the substrate amounting to 10% to 50% of the entire length in the exhaust gas flow direction from one end surface of the substrate was immersed in the upper layer-forming slurry, and suction was conducted from the other end surface. The suction-side surface was similarly immersed in the other layer-forming slurry, and suction was conducted from the one end surface. Then, the slurry was dried at 90°C for 10 minutes, to form an upper layer precursor layer constituted by the solid content of the upper layer-forming slurry.
Firing was conducted in the same manner as in Example 1, to yield an exhaust gas purification catalyst having the adsorbent portion and the upper layer formed on the substrate. The mass of the adsorbent portion, in terms of mass after firing, was 200.8 g/L with respect to the volume of the substrate in a section where the adsorbent portion was formed. The thickness of the coating layer, consisting of the adsorbent layer and the upper layer, was 48.22 $\mu$m.

{Comparative Example 1}

No void former was added to the adsorbent layer-forming slurry in Example 1. According to the aforementioned stirring conditions, the adsorbent layer-forming slurry was prepared by stirring at a rotation speed of 7000 rpm for 10 minutes. The viscosity of the adsorbent layer-forming slurry was 9800 cP. D50 in the slurry was 7 $\mu$m, and D90 was 16 $\mu$m. Other than the above, an exhaust gas purification catalyst was obtained as in Example 1.

{Comparative Example 2}

As for the void former in the adsorbent layer-forming slurry of Example 1, the mass percentage of the void former with respect to the solid content of the slurry was changed to 75%. According to the aforementioned stirring conditions, the adsorbent layer-forming slurry was prepared by stirring at a rotation speed of 7000 rpm for 10 minutes. The viscosity of the adsorbent layer-forming slurry was 3800 cP. D50 in the slurry was 15 $\mu$m, and D90 was 25 $\mu$m. Other than the above, an exhaust gas purification catalyst was obtained as in Example 1.

{Comparative Example 3}

As for the void former in the adsorbent layer-forming slurry of Example 1, acicular particles (material: cellulose) having an average diameter of 28 $\mu$m were used in an amount of 30 mass% with respect to the solid content of the slurry. According to the aforementioned stirring conditions, the adsorbent layer-forming slurry was prepared by stirring at a rotation speed of 7000 rpm for 10 minutes. The viscosity of the adsorbent layer-forming slurry was 5800 cP. D50 in the slurry was 9 $\mu$m, and D90 was 18 $\mu$m. Other than the above, an exhaust gas purification catalyst was obtained as in Example 1.

{Comparative Example 4}

In Example 1, according to the aforementioned stirring conditions, the adsorbent layer-forming slurry was prepared by stirring at a rotation speed of 1500 rpm for 10 minutes. The viscosity of the adsorbent layer-forming slurry was 1500 cP. D50 in the slurry was 10 $\mu$m, and D90 was 20 $\mu$m. Other than the above, an exhaust gas purification catalyst was obtained as in Example 1.

{Comparative Example 5}

In Example 1, the solid content of the slurry was changed to 25 mass%. According to the aforementioned stirring conditions, the adsorbent layer-forming slurry was prepared by stirring at a rotation speed of 3000 rpm for 10 minutes. The viscosity of the adsorbent layer-forming slurry was 800 cP. D50 in the slurry was 11 $\mu$m, and D90 was 19 $\mu$m. Other than the above, an exhaust gas purification catalyst was obtained as in Example 1.

{Circular void rate (%); Average number (pcs), per 1 $mm^2$ in apparent area, of approximately-perfect circular voids having circle equivalent diameter of from 1 to 60 $\mu$m; Circle equivalent diameter of approximately-perfect circular voids ($\mu$m); standard deviation $\sigma$ of circle equivalent diameter ($\mu$m); Percentage of standard deviation to circle equivalent diameter (%); Adsorbent layer thickness ($\mu$m); etc.}

For each of the exhaust gas purification catalysts obtained in Examples 1 to 10 and Comparative Examples 1 to 5, the various parameters shown in Table 1, such as the circular void rate, were measured according to the aforementioned methods employing, as the division width, the median diameter of the circle equivalent diameters of approximately-perfect circular voids in 20 fields-of-view. The sampling method was as described above. The observation surfaces in each sample were taken from discretionary positions separated by at least 5 mm from the respective upstream-side end portion and downstream-side end portion in the exhaust gas flow direction X, and a total of 20 fields-of-view on the observation surface were observed. As illustrated in Fig. 4(c), each sample was a section having a thickness of 10 mm in the X direction from the respective observation surface. The observation magnification for EPMA mapping was 300x, and the acceleration voltage was either 15 kV (for measuring Al, Ba, Ce, La, Mg, Si, and Zr) or 25 kV (for measuring Pd, Rh, and Pt). In EPMA mapping, the substrate component element was Mg, and the adsorbent portion component elements were Si and Al. The observation magnification for SEM for defining the division width was the same as that for EPMA mapping, and the acceleration voltage was 15 kV Note that the division width at the time of measurement of the various parameters was set to 0.75 times of the average value of the provisionally-found circle equivalent diameters. The results are shown in Table 1.

{Delamination Rate}

As in the case of finding the circular void rate, a circular-cylindrical sample cut out from the exhaust gas purification catalyst along the exhaust gas flow direction was used. The length direction (same as the exhaust gas flow direction X) of the obtained circular-cylindrical sample was 30 mm. A delamination test was performed by blowing air with an air gun at 6 atmospheres (gauge pressure) for 10 seconds toward one end surface of the circular-cylindrical sample, which was arranged such that the exhaust gas flow direction was oriented horizontally, from a position separated by 10 cm from the end surface. The other end surface was subjected to the same process. The weight reduction rate of the sample after these processes ((Weight before being blown - Weight after being blown)/Weight before being blown

$\times$ 100 (%)) was calculated. A value of less than 3% was rated A, 3% or greater to less than 5% was rated B, 5% or greater to less than 10% was rated C, and 10% or greater was rated D.

{Measurement of Hydrocarbon Adsorption Amount/Desorption Amount}

Each of the exhaust gas purification catalysts obtained in the Examples and Comparative Examples was set in a catalyst evaluation device (SIGU series from Horiba, Ltd.), and the hydrocarbon desorption amount (equivalent to adsorption amount) was measured by conducting heating from 50°C to 500°C at a rate of 50°C/minute according to the temperature programmed reaction method under of flow of evaluation gas, which had the composition described below, at flow rates of 25 mL/minute and 62.5 mL/minute. The desorption amount was measured as the total amount of hydrocarbons (isooctane, propylene, and toluene) in the evaluation gas. The desorption amount was measured with an exhaust gas analyzer (MEXA-ONE from Horiba, Ltd.). It should be noted that the exhaust gas purification catalysts of Comparative Examples 2 to 5 were not subjected to the hydrocarbon adsorption amount/desorption amount measurement, because they had high delamination rates and there was a risk that the adsorbent layer would delaminate during measurement and contaminate the device.

{Evaluation Gas Composition}

The evaluation gas had the following composition. Carbon dioxide: 14.00 vol%; oxygen: 0.49 vol%; isooctane: 24 ppmC; nitrogen monoxide: 500 ppm (in terms of volume); carbon monoxide: 0.50 vol%; hydrogen: 0.17 vol%; propylene: 240 ppmC; toluene: 840 ppmC; water: 10.00 vol%.

[Table 1]

| | Circular void rate [%] | Number of approximately-perfect circular voids per 1 mm² [pcs] | Circle equivalent diameter of approximately-perfect circular voids [μm] | Standard deviation σ of circle equivalent diameter [μm] | Percentage of standard deviation σ of circle equivalent diameter [%] | Adsorbent layer thickness [μm] | Adsorbent layer thickness to substrate thickness [%] | Circular void rate/adsorbent layer thickness [%/μm] | HC adsorption amount [mg] @25ml/min. (A) | HC adsorption amount [mg] @62.5ml/min. (B) | B/A | Delamination evaluation | Delamination rate [%] |
|---|---|---|---|---|---|---|---|---|---|---|---|---|---|
| Example 1 | 13.06 | 440.51 | 19.13 | 3.1 | 16.2 | 28.79 | 32.38 | 0.45 | 197.4 | 490.2 | 2.48 | A | 0.13 |
| Example 2 | 5.17 | 199.53 | 16.53 | 3.2 | 19.4 | 15.24 | 17.14 | 0.34 | 182.9 | 432.5 | 2.36 | A | 0.26 |
| Example 3 | 9.17 | 321.58 | 18.97 | 3.7 | 19.5 | 15.38 | 17.30 | 0.60 | 190.0 | 476.0 | 2.51 | A | 0.10 |
| Example 4 | 18.49 | 579.44 | 19.61 | 3.3 | 16.8 | 40.44 | 45.49 | 0.46 | 196.8 | 520.4 | 2.64 | A | 0.46 |
| Example 5 | 24.40 | 719.84 | 20.96 | 4.6 | 21.9 | 42.88 | 48.23 | 0.57 | 223.2 | 533.0 | 2.39 | A | 0.20 |
| Example 6 | 23.21 | 14088.22 | 4.72 | 0.6 | 12.7 | 52.06 | 58.56 | 0.45 | 219.6 | 550.2 | 2.51 | A | 0.25 |
| Example 7 | 11.90 | 65.31 | 51.82 | 11.3 | 21.8 | 36.43 | 40.98 | 0.33 | 205.9 | 505.2 | 2.45 | A | 0.33 |
| Example 8 | 12.23 | 511.92 | 17.12 | 3.2 | 18.7 | 58.57 | 65.88 | 0.21 | 273.4 | 675.6 | 2.47 | A | 0.35 |
| Example 9 | 15.12 | 460.11 | 18.78 | 3.1 | 16.5 | 28.52 | 32.08 | 0.53 | 220.2 | 532.1 | 2.42 | A | 0.21 |
| Example 10 | 10.23 | 423.22 | 18.88 | 3.4 | 18.0 | 27.31 | 30.72 | 0.37 | 250.2 | 643.1 | 2.57 | A | 2.31 |
| Comparative Example 1 | 0.00 | - | - | - | - | 10.16 | 11.43 | 0.00 | 168.7 | 379.1 | 2.25 | A | 0.33 |
| Comparative Example 2 | 35.20 | 1024.46 | 21.22 | 4.2 | 19.8 | 50.82 | 57.17 | 0.69 | - | - | - | C | 5.23 |
| Comparative Example 3 | 0.00 | - | - | - | - | 25.22 | 28.37 | 0.00 | - | - | - | D | 10.23 |
| Comparative Example 4 | 4.99 | 184.22 | 18.99 | 4.1 | 21.6 | 27.45 | 30.88 | 0.18 | - | - | - | D | 12.23 |
| Comparative Example 5 | 4.82 | 201.57 | 18.46 | 3.2 | 17.3 | 25.61 | 28.81 | 0.19 | - | - | - | D | 18.35 |

As shown in Table 1, in the Examples wherein the circular void rate is greater than 5% to 30% or less, the delamination rate of the adsorbent layer is suppressed, and the HC adsorption amount is large. Further, in the HC adsorption test, the ratio between the adsorption amount at 62.5 ml/minute and that at 25 ml/minute is close to 2.5x, which is the ratio in terms of flow rate, thus showing that, even in cases where exhaust gas flows at high speed, sufficient adsorption performance can be achieved.

In contrast, in Comparative Example 1 wherein no void former is used and the circular void rate is 0%, HC adsorption performance is poor, even though the delamination evaluation is satisfactory. Further, in Comparative Example 2 wherein the circular void rate is greater than 30%, no delamination resistance can be achieved. In Comparative Example 3 which uses an acicular void former, the voids become acicular, and delamination is likely to occur. Further, in Comparative Examples 4 and 5 wherein the viscosity of the slurry does not satisfy the predetermined range, the circular void rate is not within the scope of the present invention, and also delamination resistance is poor.

Industrial Applicability

The present invention can provide an exhaust gas purification catalyst capable of achieving both improvement in HC adsorption performance and high delamination resistance in an adsorbent portion including a Si-containing adsorbent material. The present invention can also provide a method capable of manufacturing, in an industrially advantageous manner, an exhaust gas purification catalyst capable of achieving both improvement in HC adsorption performance and high delamination resistance in an adsorbent portion including a Si-containing adsorbent material.

**Claims**

1. An exhaust gas purification catalyst comprising:

   a substrate; and
   an adsorbent portion provided to the substrate and containing a Si-containing adsorbent material, wherein:

   the adsorbent portion includes a plurality of voids; and
   in a cross section orthogonal to an exhaust gas flow direction, the percentage of a total area of the voids that are present in the adsorbent portion and that each satisfy the expression below is greater than 5% to 30% or less with respect to an apparent area of the adsorbent portion present on the substrate:

$$\text{Expression: } L/\{2(\pi S)^{1/2}\} \leq 1.1,$$

   wherein L is a perimeter of the void in said cross section, and S is an area of the void in said cross section.

2. The exhaust gas purification catalyst according to claim 1, wherein the Si-containing adsorbent material is a zeolite.

3. The exhaust gas purification catalyst according to claim 2, wherein the zeolite is a zeolite having at least one type of pore structure selected from 10-membered rings and 12-membered rings.

4. The exhaust gas purification catalyst according to claim 2 or 3, wherein the zeolite is at least one type of zeolite selected from BEA-type, MSE-type, MFI-type, and YFI-type.

5. The exhaust gas purification catalyst according to claim 2 or 3, wherein a content by percentage of the zeolite in the adsorbent portion is from 10 to 90 mass%.

6. The exhaust gas purification catalyst according to any one of claims 1 to 3, wherein the adsorbent portion includes at least one type of noble metal selected from Pt, Pd, and Rh.

7. The exhaust gas purification catalyst according to any one of claims 1 to 3, wherein a value of said percentage with respect to a thickness of the adsorbent portion is from 0.20 to 1.00 %/$\mu$m.

8. The exhaust gas purification catalyst according to any one of claims 1 to 3, wherein an average value of circle equivalent diameters of voids that are present in the adsorbent portion and that satisfy said expression is from 1 to 60 $\mu$m.

9. The exhaust gas purification catalyst according to any one of claims 1 to 3, wherein an average value of the number of voids that are present in the adsorbent portion and that satisfy said expression is from 200 to 800 per 1 mm$^2$ in cross-sectional area of the adsorbent portion.

10. The exhaust gas purification catalyst according to any one of claims 1 to 3, wherein a standard deviation of the circle equivalent diameters of voids that are present in the adsorbent portion and that satisfy said expression is less than 25% of the average value of the circle equivalent diameters.

11. The exhaust gas purification catalyst according to any one of claims 1 to 3, wherein the substrate is a flow-through substrate.

12. The exhaust gas purification catalyst according to any one of claims 1 to 3, comprising, as the adsorbent portion, an adsorbent layer containing a Si-containing adsorbent material, and further comprising a purification layer containing a catalytically-active component.

13. The exhaust gas purification catalyst according to any one of claims 1 to 3, wherein the adsorbent portion occupies from 20 to 50 mass% of a total coating amount.

**14.** The exhaust gas purification catalyst according to any one of claims 1 to 3, comprising, as the adsorbent portion, an adsorbent layer containing a Si-containing adsorbent material, wherein a thickness of the adsorbent layer is from 20% to 80% of a thickness of an entire coating layer on the substrate.

**15.** An exhaust gas purification system comprising:
at least two exhaust gas purification catalysts in an exhaust gas flow path, wherein
the exhaust gas purification system includes the exhaust gas purification catalyst according to any one of claims 1 to 3 as a second or subsequent catalyst from an upstream side of the exhaust gas flow direction.

**16.** A method for manufacturing an exhaust gas purification catalyst, the method comprising:

a step of applying a slurry to a substrate, the slurry containing

a Si-containing adsorbent material,
a void former constituted by a crosslinked resin, wherein the percentage of particles of the void former having a roundness of $L'/\{2(\pi S')^{1/2}\} \leq 1.05$ is 90% or higher in terms of the number of particles, and water; and

a step of firing the slurry after being applied to the substrate, to form, on the substrate, an adsorbent layer including the adsorbent material and voids formed by firing and eliminating the void former, wherein:

after stirring the slurry at a rotation speed of from 3000 to 8000 rpm, the slurry is applied to the substrate in a state where the viscosity at 25°C is from 2000 to 100000 cP; and
in said expression, L' is an outer perimeter of the void former in an image obtained by observing the void former with a scanning electron microscope, and S' is an area of the void former in an image obtained by observing the void former with a scanning electron microscope.

**17.** The method for manufacturing an exhaust gas purification catalyst according to claim 16, wherein an amount of the void former in the slurry is from 10 to 60 parts by mass with respect to 100 parts by mass of solid content in the slurry excluding the void former.

Fig. 1

Fig. 2

# Fig. 3

(a)

12c

12(16)

23(11)

(b)

12c

13 ⎤
      ⎥ 16
12 ⎦

23(11)

(c)

12c

12 ⎤
      ⎥ 16
13 ⎦

23(11)

## Fig. 4

(a)

(b)

(c)

Fig. 5

Fig. 6

Fig. 7

Fig. 8

**Fig. 9**

# Fig. 10

(a)

(b)

Horizontal division line
including intersection
point R'

Two or more intersection points
with substrate

Fig. 11

(a)

(b)

<table>
<tr><td colspan="2" align="center">**INTERNATIONAL SEARCH REPORT**</td><td colspan="2">International application No.<br><br>**PCT/JP2022/037150**</td></tr>
</table>

**A. CLASSIFICATION OF SUBJECT MATTER**

*B01J 35/10*(2006.01)i; *B01J 37/02*(2006.01)i; *B01J 37/04*(2006.01)i; *B01J 37/08*(2006.01)i; *B01D 53/94*(2006.01)i; *B01J 29/74*(2006.01)i; *B01J 20/18*(2006.01)i; *B01J 20/28*(2006.01)i

FI: B01J35/10; B01J37/02 301D; B01J37/04 102; B01J29/74 A; B01D53/94 280; B01J20/18 E; B01J20/28 Z; B01J37/08 ZAB

According to International Patent Classification (IPC) or to both national classification and IPC

**B. FIELDS SEARCHED**

Minimum documentation searched (classification system followed by classification symbols)

B01J35/10; B01J37/02; B01J37/04; B01J37/08; B01D53/94; B01J29/74; B01J20/18; B01J20/28

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2016-073958 A (IBIDEN CO LTD) 12 May 2016 (2016-05-12)<br>paragraphs [0080]-[0081], [0118]-[0125] | 1-17 |
| A | JP 2009-072693 A (HONDA MOTOR CO LTD) 09 April 2009 (2009-04-09)<br>paragraphs [0021], [0025]-[0035] | 1-17 |
| A | WO 2020/100830 A1 (UMICORE SHOKUBAI JAPAN CO., LTD.) 22 May 2020 (2020-05-22)<br>paragraphs [0052]-[0055], [0069], [0090]-[0125] | 1-17 |
| A | JP 2017-523040 A (JOHNSON MATTHEY PUBLIC LIMITED COMPANY) 17 August 2017 (2017-08-17)<br>paragraphs [0094]-[0112] | 1-17 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **13 December 2022** | **27 December 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/037150**

| Patent document cited in search report | | | Publication date (day/month/year) | Patent family member(s) | | | Publication date (day/month/year) |
|---|---|---|---|---|---|---|---|
| JP | 2016-073958 | A | 12 May 2016 | US | 2017-0326538 | A1 | |
| | | | | paragraphs [0152]-[0161] | | | |
| | | | | WO | 2016-056576 | A1 | |
| | | | | EP | 003205401 | A1 | |
| | | | | CN | 106794457 | A | |
| JP | 2009-072693 | A | 09 April 2009 | (Family: none) | | | |
| WO | 2020/100830 | A1 | 22 May 2020 | US | 2021-0379566 | A1 | |
| | | | | paragraphs [0052]-[0057], [0071], [0091]-[0126] | | | |
| | | | | EP | 003881931 | A1 | |
| | | | | CN | 113056329 | A | |
| JP | 2017-523040 | A | 17 August 2017 | US | 2017-0239619 | A1 | |
| | | | | paragraphs [0103]-[0126] | | | |
| | | | | WO | 2016-016622 | A1 | |
| | | | | EP | 003721997 | A1 | |
| | | | | CN | 106659974 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3623048 A1
- US 2019099749 A1
- WO 2017178801 A1
- JP 6751831 B
- WO 2021029098 A1